(19) Europäisches Patentamt
European Patent Office
Office européen des brevets

(11) Veröffentlichungsnummer: **0 355 735 B1**

(12) EUROPÄISCHE PATENTSCHRIFT

(45) Veröffentlichungstag der Patentschrift: **29.12.93**

(51) Int. Cl.$^5$: **C09B 62/503**, C07C 317/14, C07C 317/22, C07C 317/34, D06P 1/384

(21) Anmeldenummer: **89115260.5**

(22) Anmeldetag: **18.08.89**

Die Akte enthält technische Angaben, die nach dem Eingang der Anmeldung eingereicht wurden und die nicht in dieser Patentschrift enthalten sind.

(54) **Wasserlösliche Triphendioxazin-Verbindungen und deren sulfonyl-gruppenhaltigen Vorprodukte, Verfahren zu deren Herstellung und Verwendung der Triphendioxazine als Farbstoffe.**

(30) Priorität: **25.08.88 DE 3828824**

(43) Veröffentlichungstag der Anmeldung: **28.02.90 Patentblatt 90/09**

(45) Bekanntmachung des Hinweises auf die Patenterteilung: **29.12.93 Patentblatt 93/52**

(84) Benannte Vertragsstaaten: **BE CH DE ES FR GB IT LI**

(56) Entgegenhaltungen:
**EP-A- 0 095 255**
**EP-A- 0 148 390**
**EP-A- 0 258 686**

(73) Patentinhaber: **HOECHST AKTIENGESELLSCHAFT**

**D-65926 Frankturt(DE)**

(72) Erfinder: **Büch, Holger Michael, Dr.**
**Neugasse 4**
**D-6238 Hofheim am Taunus(DE)**
Erfinder: **Springer, Hartmut, Dr.**
**Am Erdbeerstein 27**
**D-6240 Königstein/Taunus(DE)**

EP 0 355 735 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung liegt auf dem Gebiet der faserreaktiven Farbstoffe.

In der EP-A-0 168 751 sind aus einige Tabellenbeispielen Triphendioxazin-Verbindungen mit der faserreaktiven Gruppe aus der Vinylsulfon-Reihe als Substituent an den Phenresten des Triphendioxazins bekannt, die zusätzlich an diesen Phenresten durch gegebenenfalls in den Alkylgruppen substituierte N'-(Monoalkyl)- oder N',N'-(Dialkyl)-amino-alkylamino-Reste substituiert sind. Diese Farbstoffe haben jedoch gewisse Mängel in anwendungstechnischen Eigenschaften, wie inbesondere eine schlechte Wasserlöslichkeit unter alkalischen Färbebedingungen und mangelndes Egalisiervermögen.

Desweiteren werden in der EP-A-0 148 390 basische Triphendioxazinfarbstoffe beschrieben, die neben einem zweifach auftretenden Sulfonamidrest auch eine zweifach auftretende Alkylaminogruppe enthalten, wobei der Alkylrest dieser Alkylaminogruppe durch eine quartäre Ammoniumgruppe substituiert ist. Gemäß den Angaben dieser Patentanmeldungs-Veröffentlichung eignen sich diese Farbstoffe insbesondere zum Färben von Papier.

Es wurden nunmehr neue Triphendioxazin-Verbindungen mit quartären Ammoniumgruppen als wasserlöslich machende Reste entsprechend der allgemeinen Formel (1)

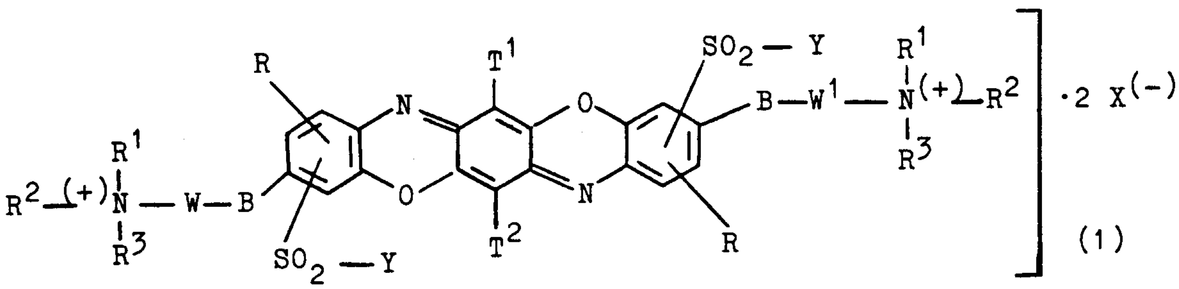

(1)

gefunden, die wertvolle faserreaktive Farbstoffeigenschaften besitzen.

In dieser Formel (1) bedeuten:

B ist ein Sauerstoff- oder Schwefelatom oder eine Aminogruppe der Formel -NH- oder -N(R')- , in welcher

R' eine Alkylgruppe von 1 bis 4 C-Atomen, wie die Methyl- oder Ethylgruppe, ist, die substituiert sein kann, oder eine der Bedeutungen der Gruppe $X^{(-)}[R^3,R^2,R^1]N^{(+)}$—W— bzw. —$W^1$—$^{(+)}N[R^1,R^2,R^3]X^{(-)}$ mit W, $W^1$, $R^1$,$R^2$,$R^3$ und $X^{(-)}$ der nachstehend angegebenen Definition besitzt oder zusammen mit $R^1$ einen Alkylenrest von 2 bis 4 C-Atomen bildet;

$R^1$ ist eine geradkettige oder verzweigte Alkylgruppe von 1 bis 6 C-Atomen, bevorzugt von 1 bis 4 C-Atomen, die substituiert sein kann, bevorzugt durch 1 oder 2 Substituenten, wobei die Substituenten insbesondere wasserlöslichmachende oder hydrophile Gruppen sind;

$R^2$ hat eine der Bedeutungen von $R^1$ und

$R^3$ hat eine der Bedeutungen von $R^1$ oder

$R^2$ und $R^3$ bilden zusammen mit dem positiv geladenen Stickstoffatom und gegebenenfalls einem weiteren Heteroatom, wie Sauerstoff-, Stickstoff- oder Schwefelatom, einen heterocyclischen Rest, wie den Trimethylen-iminium, Pyrrolidinium-, Morpholinium-, Piperidinium- oder Piperazinium-Rest, wobei an den heterocyclischen Rest gegebenenfalls ein Benzorest ankondensiert sein kann, wie beispielsweise den Benzopyrrolidinium-Rest;

$X^{(-)}$ ist das Moläquivalent eines farblosen Anions, vorzugsweise einer starken Säure (wobei im Falle, daß einer der Substituenten von $R^1$, $R^2$ und $R^3$ eine saure Gruppe enthält, diese mit dem Ammoniumstickstoff ein inneres Salz zu bilden vermag, so daß hier die Bedeutung von $X^{(-)}$ völlig entfällt);

W ist ein Alkylenrest von 2 bis 6 C-Atomen, der durch 1 oder 2 Substituenten aus der Gruppe Sulfato, Phosphato, Carboxy, Sulfo, Phenyl, Monosulfophenyl oder Disulfophenyl substituiert sein kann, oder ein Alkylenrest von 4 bis 12 C-Atomen ist, der durch 1 bis 5 Heterogruppen unterbrochen ist, die aus den Gruppen -O- , -S- , $-SO_2-$ , -CO- , 1,4-Piperidino, -NH- und $-N(R^o)-$ , worin $R^o$ eine Alkylgruppe von 1 bis 6 C-Atomen ist, die durch eine Sulfo-, Sulfato-, Carboxy-, Phosphato-, Phenyl-, Monosulfophenyl- oder Disulfophenyl-Gruppe substituiert sein kann, oder eine Alkanoylgruppe von 2 bis 5 C-Atomen bedeutet, ausgewählt sind;

$W^1$ hat eine der Bedeutungen von W;

Y ist die Vinylgruppe oder die Ethylgruppe, die in β-Stellung einen durch ein Alkali eliminierbaren Substituenten enthält, wobei die Gruppe $-SO_2-Y$ bevorzugt in ortho-Stellung zum Rest B an den Benzolkern gebunden ist;

R ist ein Wasserstoffatom oder eine Sulfogruppe;

$T^1$ ist ein Wasserstoffatom oder ein Halogenatom, wie ein Fluor- und insbesondere Chlor- oder Bromatom, eine Cycloalkylgruppe von 5 bis 8 C-Atomen, wie die Cyclohexylgruppe, eine Aralkyloxygruppe, eine Alkoxygruppe von 1 bis 4 C-Atomen, wie die Methoxygruppe, eine Aryloxygruppe, eine Alkylgruppe von 1 bis 4 C-Atomen, wie die Methylgruppe, eine Arylgruppe, eine Aralkylgruppe, eine Cyangruppe, eine Carboxygruppe, eine Carbalkoxygruppe von 2 bis 5 C-Atomen, wie die Carbomethyl- oder Carbethoxygruppe, eine Arylaminogruppe, eine Carbamoylgruppe, eine N-Alkylcarbamoyl-Gruppe oder N,N-Dialkyl-carbamoyl-Gruppe mit Alkylresten von jeweils 1 bis 4 C-Atomen, eine N-Arylcarbamoyl-Gruppe, eine Alkanoylaminogruppe von 2 bis 5 C-Atomen, wie die Acetylaminogruppe, oder eine Aroylaminogruppe, wie die Benzoylaminogruppe, wobei die Arylreste in diesen genannten Substituenten bevorzugt Phenylreste sind, die noch durch 1 oder 2 Substituenten aus der Gruppe Halogen, wie Chlor, Nitro, Alkyl von 1 bis 4 C-Atomen, Alkoxy von 1 bis 4 C-Atomen, Carboxy und Sulfo substituiert sein können und wobei $T^1$ bevorzugt ein Wasserstoffatom, eine Alkanoylaminogruppe von 2 bis 5 C-Atomen, eine Phenoxygruppe, die substituiert sein kann, eine Alkoxygruppe von 1 bis 4 C-Atomen oder eine Alkylgruppe von 1 bis 4 C-Atomen oder insbesondere bevorzugt ein Chloratom oder Bromatom ist;

$T^2$ hat eine der für $T^1$ angegebenen Bedeutungen;

die einzelnen, auch zweifach erscheinenden Formelglieder, können zueinander gleiche oder voneinander verschiedene Bedeutungen besitzen.

Die Substituenten "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen Gruppen entsprechend der allgemeinen Formel $-OSO_3M$ ,

in welchen

M ein Wasserstoffatom oder ein Alkalimetall, wie Natrium, Kalium oder Lithium, bedeutet.

Die neuen Dioxazinverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Substituenten im Alkylrest von R′ sind beispielsweise wasserlöslichmachende oder hydrophile Gruppen, wie beispielsweise die Sulfo-, Sulfato-, Phosphato-, Carboxygruppe oder eine niedere Alkoxygruppe, wie Methoxygruppe; andere Gruppen sind beispielsweise eine Alkanoylaminogruppe von 2 bis 5 C-Atomen, wie die Acetylaminogruppe, oder ein Phenyl- oder Sulfophenyl-Rest. Beispiele für Alkylreste von R′ sind Methyl, Ethyl, 1-Propyl, 2-Propyl, 1-Butyl, 2-Butyl, 2-Methyl-1-propyl, Benzyl, 3-Sulfo- oder 4-Sulfo-benzyl, β-(Sulfophenyl)-ethyl, β-Sulfoethyl und β-Sulfatoethyl. Bevorzugt bedeutet R′ eine Methylgruppe.

Mögliche Substituenten in den Alkylresten $R^1$, $R^2$ und $R^3$ sind beispielsweise 1, 2 oder 3, bevorzugt 1 oder 2, Substituenten aus der Gruppe Carboxy, Sulfo, Sulfato, Phosphato, Alkoxy von 1 bis 4 C-Atomen, wie Methoxy, Alkanoyloxy von 2 bis 5 C-Atomen, wie Acetyloxy, Phenyl und durch 1 oder 2 Sulfogruppen substituiertes Phenyl, bevorzugt hiervon diejenigen Substituenten, die wasserlöslich machende oder hydrophile Eigenschaften haben. Reste $R^1$, $R^2$ oder $R^3$ sind beispielsweise Methyl, Ethyl, 1-Propyl, 2-Propyl, 1-Butyl, 2-Butyl, 2-Methyl, 1-Propyl, 1-Pentyl, Phenyl, Benzyl, 3- oder 4-Sulfobenzyl, β-Sulfato-ethyl, β-Phosphatoethyl, Carboxymethyl, β-Sulfo-ethyl, ω-Sulfato-hexyl, γ-Sulfato-propyl, β-Carboxy-ethyl, β-Acetyloxy-ethyl, β-Propionyloxy-ethyl, Carbomethoxy-methyl und Carbethoxy-methyl, insbesondere hiervon Methyl, Ethyl, Carboxymethyl und β-Sulfatoethyl.

Anionen $X^{(-)}$ sind beispielsweise das Fluorid-, Chlorid- oder Bromidanion, das Moläquivalent des Methosulfat- oder Ethosulfatanions ($\cdot 1/2\ CH_3SO_4^{2(-)}$ bzw. $\cdot 1/2\ C_2H_5SO_4^{2(-)}$) oder das Benzolsulfonat-, das Toluolsulfonat-, das Tetrafluoroborat-, das Hexachloroantimonat- und bevorzugt das Hydrogensulfat-anion und insbesondere das Moläquivalent des Sulfatanions ($\cdot 1/2\ SO_4^{2(-)}$ ).

Substituenten im Alkylenrest von W oder W[1] sind die Sulfato-, Phosphato-, Carboxy-, Sulfo-, Phenyl- oder eine Monosulfophenyl- oder Disulfophenyl-Gruppe. Bei den Heterogruppen, durch welche die Alkylengruppen von W oder W[1] unterbrochen sein können handelt es sich um: -O- , -S- , $-SO_2-$ , -CO- , 1,4-Piperidino, -NH- und $-N(R^o)-$ worin $R^o$ eine Alkylgruppe von 1 bis 6 C-Atomen, bevorzugt von 1 bis 4 C-Atomen, wie insbesondere die Methyl- oder Ethylgruppe, die substituiert sein kann, oder eine Alkanoylgruppe von 2 bis 5 C-Atomen, wie die Acetylgruppe.

Reste W[1] sind beispielsweise der 1,2-Ethylen-, 1,3-Propylen-, 1,4-Butylen-, 1,6-Hexylen- und 2-Sulfato-1,3-propylen-Rest, desweiteren ein Rest der nachstehenden Formeln (a) bis (u):

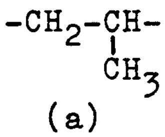 (a)  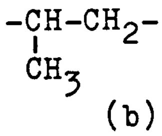 (b)  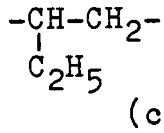 (c)  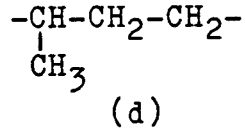 (d)

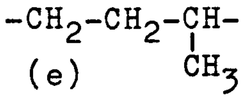 (e)  $-C(CH_3)_2-CH_2-$ (f)  $-CH_2-C(CH_3)_2-CH_2-$ (g)

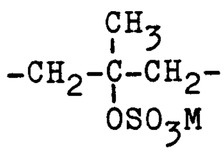 (h)  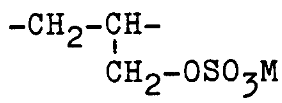 ($j_1$)  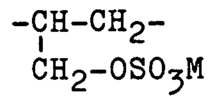 ($j_2$)

$-CH_2-CH_2-(O-CH_2-CH_2)_n-$ ($k_1$)

$-(CH_2-CH_2-O)_n-CH_2-CH_2-$ ($k_2$)

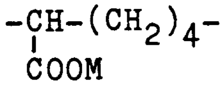 (m)  $-CH_2-CH_2-O-CH_2-CH_2-$ (n)

$-CH_2-CH_2-S-CH_2-CH_2-$ (p)  $-CH_2-CH_2-SO_2-CH_2-CH_2-$ (q)

$-(CH_2)_3-O-CH_2-CH_2-O-(CH_2)_3-$ (r)  $-CH_2-CH_2-NH-CH_2-CH_2-$ (s)

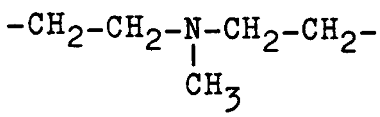 (t)  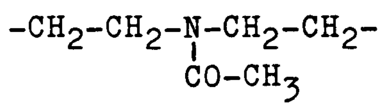 (u)

in welchen M die obengenannte Bedeutung besitzt und n für eine ganze Zahl von 1 bis 5 steht.

Bevorzugt hiervon ist der 1,2-Ethylen-, 1,3-Propylen- und 2-Sulfato-1,3-propylen-Rest und ein Rest der Formel (a), (b), (d), ($j_1$) und ($k_1$).

Beispiele für die Reste W sind die eben für W[1] genannten, jedoch "spiegelbildlich" angeordneten Gruppen.

Substituenten, die gemäß dem Formelglied Y in $\beta$-Stellung der Ethylgruppe gebunden sind und durch ein Alkali unter Bildung der Vinylgruppe eliminiert werden können, sind beispielsweise Alkanoyloxygruppen

von 2 bis 5 C-Atomen, wie die Acetyloxygruppe, Aroyloxygruppen, wie die Benzoyloxy-, Sulfobenzoyloxy- oder Carboxybenzoyloxy-Gruppe, Dialkylaminogruppen mit Alkylresten von 1 bis 4 C-Atomen, wie insbesondere die Dimethylamino- und Diethylaminogruppe, Trialkylammoniumgruppen mit Alkylresten von 1 bis 4 C-Atomen, wie die Trimethylammoniumgruppe, das Chloratom, das Bromatom, Alkylsulfonyloxygruppen mit Alkylresten von 1 bis 4 C-Atomen, eine Phosphatogruppe, eine Thiosulfatogruppe oder eine Sulfatogruppe. Bevorzugt sind von den Gruppen entsprechend dem Formelglied Y die β-Chlorethyl-, β-Phosphatoethyl-, β-Acetyloxyethyl- und β-Thiosulfatoethyl-Gruppe und insbesondere die Vinylgruppe und ganz besonders bevorzugt die β-Sulfatoethyl-Gruppe.

Bevorzugte erfindungsgemäße Triphendioxazinverbindungen sind insbesondere solche, in welchen der Formelrest B jeweils die Gruppe -NH- bedeutet, desweiteren solche, in welchen W und $W^1$ jeweils die Ethylen- oder n-Propylen-Gruppe bedeutet, desweiteren solche entsprechend der allgemeinen Formel (1), in welcher $R^1$ und $R^2$ beide für die Methyl- oder Ethylgruppe stehen und $R^3$ die Methylgruppe oder die Carboxymethyl-, β-Sulfatoethyl- oder β-Sulfoethyl-Gruppe oder eine durch eine Sulfatogruppe substituierte n-Propylgruppe ist. Bevorzugt sind weiterhin diejenigen Triphendioxazinverbindungen der Formel (1), in welchen $T^1$ und $T^2$ jedes ein Chloratom bedeuten, und desweiteren Triphendioxazinverbindungen, in welchen Y die β-Sulfatoethyl-Gruppe bedeutet.

Die vorliegende Erfindung betrifft weiterhin Verfahren zur Herstellung der obengenannten und definierten Verbindungen der allgemeinen Formel (1). Diese sind dadurch gekennzeichnet, daß man eine Verbindung der allgemeinen Formel (2)

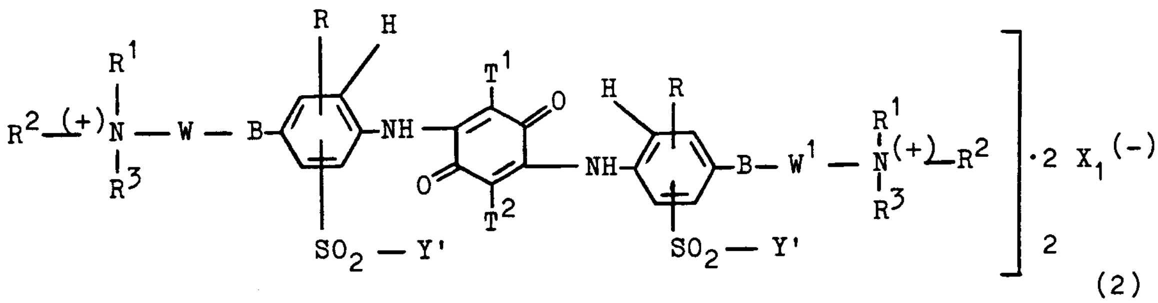

(2)

(in welcher Y′ die Vinylgruppe, die β-Hydroxyethyl-Gruppeoder eine Ethylgruppe, die in β-Stellung einen durch ein Alkali eliminierbaren Substituenten, wie einen der für Y genannten, enthält, bevorzugt die β-Hydroxyethyl-Gruppe ist, $X_1^{(-)}$ das Moläquivalent eines beliebigen Anions bedeutet, wie beispielsweise ein gemäß der Definition von $X^{(-)}$ definiertes farbloses Anion oder ein Hydroxyl- oder Jodion, und $R^1$, $R^2$, $R^3$, B, W, $W^1$ R, $T^1$ und $T^2$ die obengenannten Bedeutungen haben, wobei diese als substituierte Alkylgruppen auch hydroxysubstituierte Alkylgruppen sein können und die Gruppen $-SO_2$-Y′ bevorzugt in ortho-Stellung zur Gruppe B gebunden sind) in einem unter den Reaktionsbedingungen und gegenüber den Reaktanten inerten Lösemittel und gegebenenfalls in Gegenwart eines Oxidationsmittels, bevorzugt jedoch in saurem Medium und bevorzugt Gegenwart eines Oxidationsmittels, zum Triphendioxazin cyclisiert. Die Umsetzung erfolgt in an und für sich bekannter Verfahrensweise, so beispielsweise in siedendem Nitrobenzol oder o-Dichlorbenzol, gegebenenfalls in Gegenwart von Benzoylchlorid oder Toluolsulfochlorid, oder in einem siedenden Alkanol von 2 bis 4 C-Atomen oder in Pyridin in Gegenwart von Aluminiumtrichlorid, bevorzugt jedoch in Schwefelsäure oder Schwefeltrioxid enthaltender Schwefelsäure als Reaktionsmedium, wobei als Oxidationsmittel unter anderem Alkylhydroperoxide, Alkalihypochlorite, Alkalichlorate, Kaliumpermanganat und Chlor geeignet sind, insbesondere jedoch als Oxidationsmittel Schwefeltrioxid, Wasserstoffperoxid, Ammonium- oder Alkalipersulfate, Jod oder anorganische Jodverbindungen in Gegenwart von Oleum, Natriumperborat, vorzugsweise jedoch Natrium-, Kalium- oder Ammoniumperoxodisulfat [entsprechend den Formeln $Na_2S_2O_8$ bzw. $K_2S_2O_8$ bzw. $(NH_4)_2S_2O_8$], verwendet werden. Analoge Verfahrensweisen sind beispielsweise aus den deutschen Offenlegungsschriften Nrs. 2 122 262, 2 124 080, 2 302 382, 2 344 781, 2 503 611 und 2 823 828, aus der britischen Patentschrift Nr. 2 019 872, weiterhin aus Helvet. Chim. Acta 22, 1348 (1939) und insbesondere aus der britischen Patentschrift Nr. 1 589 915 und den europäischen Patentanmeldungs-Veröffentlichungen Nrs. 0 141 359A und 0 168 751A bekannt.

Vorzugsweise führt man die Cyclisierung in konzentrierter Schwefelsäure, wie 96- bis bevorzugt 100%iger Schwefelsäure und insbesondere in Schwefeltrioxid enthaltender Schwefelsäure (Oleum), wie bis zu 50 gew.%igem Oleum, durch. Die Reaktionstemperatur wird zwischen 0 und 60 °C gewählt. Das als Reaktionsmedium und Agenz verwendete Oleum besitzt in der Regel einen Gehalt von 5 bis 40 Gew.-%,

bevorzugt 10 bis 20 Gew.-% an Schwefeltrioxid. Bei Zusatz von Peroxodisulfat als Oxidationsmittel führt man die Cyclisierung zwischen 0 und 40 °C, bevorzugt zwischen 15 und 25 °C durch. Bei Verwendung von Oleum/Peroxodisulfat soll die Reaktionstemperatur 30 °C nicht überschreiten. Bevorzugt ist 10 bis 20%iges Oleum unter Verwendung einer zur Verbindung (2) doppelt molaren Menge Peroxodisulfat. Bei Jod als Oxidationsmittel wird dieses in katalytischen Mengen in 10 bis 50%igem Oleum eingesetzt; hier liegt die Reaktionstemperatur in der Regel zwischen 0 und 40 °C.

Gleichzeitig mit der Cyclisierung oder erst nach der Cyclisierungsreaktion können gegebenenfalls vorhandene Hydroxyalkylgruppen, wie beispielsweise die $\beta$-Hydroxyethyl-Gruppe des Formelrestes Y′, mittels eines Sulfatisierungs- oder Phosphatierungsmittels, wie 96-100%iger Schwefelsäure oder Schwefeltrioxid enthaltender Schwefelsäure bzw. Polyphosphorsäure, in die entsprechenden $\beta$-Sulfatoalkyl- bzw. $\beta$-Phosphatoalkyl-Gruppen verestert werden. Wird also der Ringschluß in Schwefelsäure oder Oleum als Reaktionsmedium ausgeführt, werden Hydroxygruppen, die an einem Alkylrest des Moleküls gebunden sind, wie beispielsweise die oben bereits erwähnten $\beta$-Hydroxyethyl-Gruppen des Formelrestes Y′ oder Hydroxyalkyl-Gruppen der Formelreste $R^1$, $R^2$, $R^3$, R′, $R^o$, W und $W^1$ in die entsprechenden Sulfatoalkylgruppen übergeführt.

Bei Cyclisierungstemperaturen von oberhalb 15 °C, insbesondere oberhalb 25 °C, lassen sich mittels 100 %iger Schwefelsäure oder Oleum erfindungsgemäß auch Sulfogruppen in die aromatischen Ringe der Arylreste von $R^1$, $R^2$, $R^3$, R′, $R^o$, $T^1$ und $T^2$ einführen. Die Sulfierungsreaktion kann aber auch nach der Cyclisierung, gegebenenfalls in einem gesonderten Reaktionsschritt beim isolierten Cyclisierungsprodukt (Triphendioxazin), erfolgen. Hier wird die Sulfierungsreaktion in der Regel zwischen 20 und 80 °C, bevorzugt zwischen 30 und 70 °C, geführt.

Verbindungen der Formel (1) mit Y gleich einer $\beta$-Sulfatoethyl-Gruppe können anschließend gemäß bekannten Verfahrensweisen in andere erfindungsgemäße Verbindungen der Formel (1) übergeführt werden, in welcher die Y für Vinylgruppen oder Ethylgruppen mit einem anderen in $\beta$-Stellung befindlichen alkalisch eliminierbaren Substituenten stehen.

Die Ausgangsverbindungen der allgemeinen Formel (2) können in ebenfalls erfindungsgemäßer Weise durch Umsetzung einer Verbindung der allgemeinen Formel (3)

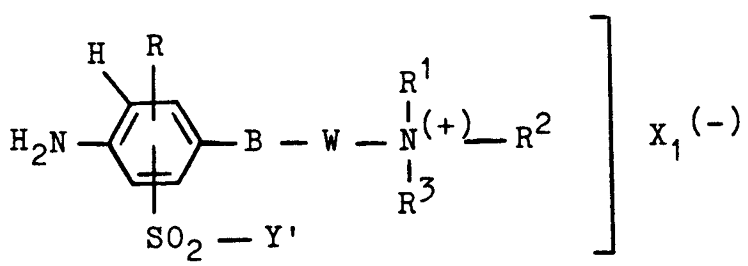

(3)

(worin W auch für $W^1$ steht, Y′ die obengenannte Bedeutung besitzt und bevorzugt die $\beta$-Hydroxyethyl-Gruppe ist sowie $R^1$, $R^2$, $R^3$, B, R und $X_1^{(-)}$ die obengenannten Bedeutungen haben, wobei diese als substituierte Alkylgruppen auch hydroxysubstituierte Alkylgruppen sein können und Arylreste auch von Sulfogruppen frei sein können und die Gruppen $-SO_2-Y'$ bevorzugt in ortho-Stellung zur Gruppe B gebunden sind)

mit einer 1,4-Benzochinon-Verbindung der allgemeinen Formel (4)

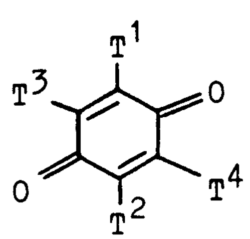

(4)

in welcher $T^1$ und $T^2$ die obengenannten Bedeutungen haben und $T^3$ und $T^4$ zueinander gleich oder voneinander verschieden sind und jedes für ein Wasserstoffatom, eine Alkoxygruppe von 1 bis 4 C-Atomen, wie insbesondere die Methoxygruppe, oder für eine Phenoxygruppe steht oder bevorzugt ein Halogenatom,

wie Fluoratom, besonders Bromatom und insbesondere Chloratom, ist, wobei $T^3$ und $T^4$ auch eine zu $T^1$ und $T^2$ gleiche Bedeutung haben können, hergestellt werden.

Die Umsetzung einer Verbindung der allgemeinen Formel (3) oder zweier verschiedener Aminoverbindungen der allgemeinen Formel (3), jeweils in zusammen 2-fach äquivalenter Menge, mit einem Äquivalent einer Verbindung der allgemeinen Formel (4) zur Verbindung der allgemeinen Formel (2) erfolgt analog bekannten Verfahrensweisen, die beispielsweise in den europäischen Patentanmeldungs-Veröffentlichungen Nrs. 0 141 996A und 0 168 751 A erwähnt und beschrieben sind. Beispielsweise kann die Umsetzung in wäßrigem Medium oder in wäßrig-organischem Medium oder in rein organischem Medium erfolgen, wobei die organischen Lösemittel polare aprotische und protische Lösungsmittel darstellen, wie beispielsweise niedere Alkanole, wie Methanol und Ethanol, und halogenierte Benzole, wie o-Dichlorbenzol. Bevorzugt wird das Chinon (4) jedoch in einem mehr oder weniger stärkeren Überschuß eingesetzt, der in der Regel 5 bis 20 % beträgt. Die Umsetzung der Amine (3) mit den Chinonen (4) kann bei einer Temperatur zwischen 20 und 100 °C, vorzugsweise zwischen 50 und 70 °C, in Gegenwart eines säurebindenden Mittels, wie beispielsweise eines Alkali- oder Erdalkalicarbonats oder -acetats, so beispielsweise Natriumacetat, Natriumcarbonat oder Natriumbicarbonat, oder eines Alkali- oder Erdalkalihydroxids, wie Natriumhydroxid, oder eines Oxids eines Erdalkalimetalls, wie beispielsweise Magnesiumoxid, durchgeführt werden. Sofern in einem wäßrigen oder wäßrig-organischen Medium gearbeitet wird, wird ein pH-Bereich zwischen 4 und 7, vorzugsweise zwischen 5,5 und 6,5, eingestellt.

Die Anilin-Ausgangsverbindungen der allgemeinen Formel (3) sind bisher noch nicht bekannt. Die Erfindung betrifft somit auch diese Verbindungen, Verfahren zu deren Herstellung und ihre Verwendung zur Synthese von Farbstoffen, insbesondere von Triphendioxazinverbindungen der obigen Formel (1). Sie lassen sich analog bekannten Verfahrensweisen der Alkylierung (Quaternierung) von Aminoverbindungen mit üblichen und bekannten Alkylierungsmitteln herstellen, so beispielsweise erfindungsgemäß durch Umsetzung einer Amino-nitrobenzol-Verbindung der allgemeinen Formel (5)

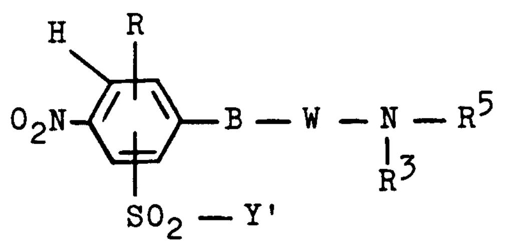

(5)

in welcher Y', B, W, R und $R^3$ die obengenannten Bedeutungen haben und $R^5$ für ein Wasserstoffatom steht oder eine der Bedeutungen von $R^2$ besitzt, mit einem Alkylierungsmittel und durch anschließende Reduktion der Nitrogruppe.

Die nach an und für sich bekannten und üblichen Verfahrensweisen der Quaternierung (s. Houben-Weyl, Methoden der Organischen Chemie, 4. Aufl., Band XI/2, S. 587-640 (1958)) durchführbare Synthese erfolgt beispielsweise erfindungsgemäß in wäßrigem oder wäßrigorganischem oder organischem Medium, wobei das organische Lösemittel ein solches mit hohem Dipolmoment ist, wie beispielsweise ein Alkanol von 1 bis 4 C-Atomen oder Acetonitril, bei einer Temperatur zwischen 10 °C und 120 °C. Alkylierungsmittel sind die in der Literatur bekannten Verbindungen, wie beispielsweise solche entsprechend der allgemeinen Formel $R^1$-X mit $R^1$ der obengenannten Bedeutung und X der Bedeutung eines Acylrestes, wie Halogen und 1/2 $SO_4$, so insbesondere die entsprechenden Alkylester einer Mineralsäure, wie ein Alkyljodid oder ein Alkoxysulfat, desweiteren Alkylenoxide, Alkyllactone oder Acetylen.

Die Reduktion der Nitrogruppe der quaternierten Ausgangsverbindung der allgemeinen Formel (5) zur Verbindung der allgemeinen Formel (3) erfolgt ebenfalls nach an und für sich üblichen Methoden der Reduktion von aromatischen Nitrogruppen mittels Wasserstoff an einen metallischen Katalysator, wie einem Palladium-, Platin- oder Raney-Nickelkatalysator, unter Druck im Autoklaven oder mittels der Reduktion nach Béchamp bei Verwendung von Eisenspänen.

Die Ausgangsverbindungen entsprechend der allgemeinen Formel (5) sind bekannt oder können analog an und für sich üblichen Verfahrensweisen hergestellt werden, wie beispielsweise nach den Angaben der deutschen Offenlegungsschrift Nr. 3 502 991.

Die als Ausgangsverbindungen dienenden Benzochinone der allgemeinen Formel (4) sind beispielsweise 2-Methyl-3,5,6-tribrom-1,4-benzochinon, 2-Methoxy-3,5,6-trichlor-1,4-benzochinon, 2,3,5,6-Tetramethoxy-1,4-benzochinon, 2,3,5,6-Tetraphenoxy-1,4-benzochinon, 2-Methyl-3,6-dichlor-1,4-benzochinon, 2,5-Dichlor-1,4-benzochinon und bevorzugt 2,3,5,6-Tetrabrom-1,4-benzochinon und insbesondere 2,3,5,6-Tetrachlor-1,4-benzochinon (Chloranil) und 2,3,5,6-Tetrafluor-1,4-benzochinon.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) - im nachfolgenden als Verbindungen (1) bezeichnet - haben faserreaktive Eigenschaften und besitzen wertvolle Farbstoffeigenschaften. Sie können deshalb zum Färben (einschließlich Bedrucken) von natürlichen, regenerierten oder synthetischen hydroxygruppenhaltigen und/oder carbonamidgruppenhaltigen Materialien, beispielsweise in Form von Flächengebilden, wie Papier und Leder, oder in der Masse, von Polyamid oder Polyurethan, insbesondere aber von solchen Materialien in Faserform, wie Cellulosefasermaterialien, Seide, Wolle und synthetische Polyamid- und Polyurethanfasern, verwendet werden. Auch können die bei der Synthese der Verbindungen (1) anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Die Verbindungen (1) lassen sich, gemäß der erfindungsgemäßen Anwendung, auf den genannten Substraten, insbesondere auf den genannten Fasermaterialien, nach den für wasserlösliche, insbesondere faserreaktive, Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe-und Fixierweisen sind in der Literatur zahlreich beschrieben, wie beispielsweise auch in der europäischen Patentanmeldungs-Veröffentlichung Nr. 0 168 751 A.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hierbei kann man analog bekannten Verfahrensweisen der Applikation und Fixierung von faserreaktiven Farbstoffen vorgehen.

Die mit den Verbindungen (1) hergestellten Färbungen und Drucke zeichnen sich durch reine, vorwiegend blaue Farbtöne aus. Insbesondere die Färbungen und Drucke auf Cellulosefasermaterialien besitzen sehr hohe Farbstärken und ebenso sehr gute Lichtechtheiten, einschließlich guter Naßlicht- und Schweißlichtechtheiten, ebenso gute Hypochloritbleich- und Chlorbadewasserechtheiten, weiterhin vorzügliche Naßechtheiten, wie beispielsweise gute Waschechtheiten bei 40 bis 60 °C, saure und alkalische Walk-, Überfärbe- und Schweißechtheiten, Alkali-, Säure-, Wasser-und Seewasserechtheiten, desweiteren eine gute Plissierechtheit, Bügelechtheit und Reibechtheit. Ebenso besitzen sie eine gute Naßliegeechtheit und eine sehr gute Säurelagerbeständigkeit (kein "acid fading") beim Lagern von feuchten, noch Essigsäure enthaltendem, gefärbtem Material. Desweiteren sind die Färbungen gegen die üblichen Kunstharzappreturen stabil. Ein Teil der Verbindungen (1) sind in der Reinheit des Farbtones und in wichtigen Echtheitseigenschaften mit faserreaktiven Anthrachinonfarbstoffen vergleichbar.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden. Die Absorptionsmaxima ($\lambda_{max}$-Werte) wurden in wäßriger Lösung an Hand der Alkalimetallsalze bestimmt. Die $^1$H-NMR-Messungen erfolgten in einem 360 MHz-Gerät in $d_6$-Dimethylsulfoxid mit Tetramethylsilan als innerem Standard, sofern nicht anders angegeben.

**Beispiel A**

a) In eine Lösung von 20 °C aus 33,1 Teilen 3-($\beta$-Hydroxyethylsulfonyl)-4-N-[$\gamma$-(N',N'-dimethylamino)-propyl]-aminonitrobenzol in 100 Volumenteilen Ethanol wird portionsweise eine Lösung von 14,2 Teilen

Methyljodid in 30 Volumenteilen Ethanol gegeben; hierbei steigt die Reaktionstemperatur auf 40 °C an. Die Methylierungsreaktion wird sodann durch 30-minütiges Erhitzen bei Rückflußtemperatur zu Ende geführt. Nach Abkühlen des Ansatzes fällt die hergestellte Verbindung der Formel

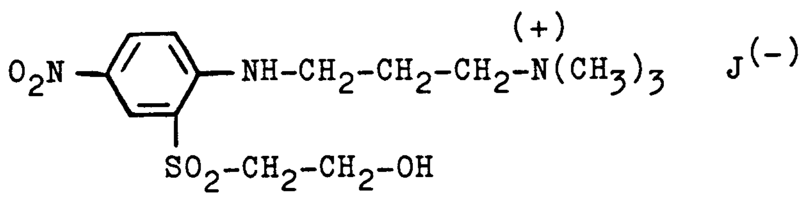

nahezu quantitativ in Form gelber Kristalle aus. Sie besitzt einen Schmelzpunkt von 218-221 °C und zeigt folgende Daten im $^1$H-NMR-Spektrum:

δ = 8,43 ppm (d,1H); 8,26 ppm (dd,1H); 7,32 ppm (t,1H); 7,13 ppm (d,1H); 4,90 ppm (t,1H); 3,76 ppm (q,2H); 3,56 ppm (t,2H); 3,47 ppm (m,2H); 3,42 ppm (m,2H); 3,10 ppm (s,9H); 2,05 ppm (m,2H).

b) Die aus dem Reaktionsansatz von a) isolierten gelben Kristalle werden zermahlen in 300 Teilen Wasser suspendiert und nach Zugabe von 2 Teilen Raney-Nickel bei einer Temperatur zwischen 25 und 60 °C und einem Wasserstoffdruck von 10 bis 20 bar reduziert. Die erhaltene Anilinverbindung wird nach Abtrennung des Katalysators und Gehaltsbestimmung durch Diazotierung vorzugsweise in Lösung weiterverarbeitet. Sie kann aber auch in Form ihres Jodidsalzes durch Eindampfen der Lösung unter reduziertem Druck isoliert werden. Man erhält ein Öl, das nach mehreren Stunden durchkristallisiert. Die Kristalle werden in 100 Volumenteilen Aceton suspendiert, abgesaugt und getrocknet. Sie haben einen Schmelzpunkt von 165-168 °C und zeigen folgende Daten in der $^1$H-NMR-Spektroskopie:

δ = 6,96 ppm (d,1H); 6,85 ppm (dd,1H); 6,72 ppm (d,1H); 5,39 ppm (t,1H); 4,85 ppm (s,br,2H); 4,78 ppm (s,br,1H); 3,64 ppm (m,2H); 3,48 ppm (m,4H); 3,12 ppm (m,2H); 3,07 ppm (s,9H); 1,98 ppm (m,2H).

**Beispiel B**

Zu einer Lösung von 83 Teilen 3-(β-Hydroxyethylsulfonyl)-4-N-[γ-(N',N'-dimethylamino)-propyl]-amino-nitrobenzol wird bei einer Temperatur von 35 bis 40 °C langsam eine Lösung von 24 Teilen Chloressigsäure in 30 Volumenteilen Ethanol gegeben. Man führt die Umsetzung unter Rückflußtemperatur während etwa 4 Stunden zu Ende. Das ausgefallene gelbe Reaktionsprodukt wird abgesaugt, mit wenig Aceton gewaschen und unter reduziertem Druck getrocknet.

Das erhaltene 3-(β-Hydroxyethylsulfonyl)-4-N-[γ-(N',N'-dimethyl-N'-carboxymethyl-ammonium)-propyl]-amino-nitrobenzol besitzt einen Schmelzpunkt von 179-182 °C und zeigt folgende $^1$H-NMR-Daten:

δ = 8,41 ppm (d,1H); 8,25 ppm (dd,1H); 7,31 ppm (m,1H); 7,08 ppm (d,1H); 4,97 ppm (s,br,1H); 3,74 ppm (m,2H); 3,56 ppm (m,2H); 3,48 ppm (m,2H); 3,12 ppm (s,2H); 3,07 ppm (m,2H); 2,71 ppm (s,6H); 1,98 ppm (m,2H).

Die Nitroverbindung wird in 500 Volumenteilen Wasser gelöst und nach Zugabe von 5 Teilen Raney-Nickel mittels Wasserstoff unter einem Druck von 10 bis 20 bar bei einer Temperatur zwischen 25 und 60 °C reduziert. Nach Abtrennung des Katalysators kann die erhaltene Anilinlösung unter Stickstoffatmosphäre weiterverarbeitet werden (s. bspw. nachfolgendes Beispiel 2) oder auch gemäß den Angaben des Beispieles A isoliert werden.

**Beispiel C**

Zu einer Lösung von 132,4 Teilen 3-(β-Hydroxyethylsulfonyl)-N-[γ-(N',N'-dimethylamino)-propyl]-amino-nitrobenzol in 400 Volumenteilen Ethanol werden langsam bei einer Temperatur von 35 bis 40 °C 24,4 Teile 2-Chlorethanol gegeben. Die Umsetzung erfolgt sodann unter-Rückflußtemperatur während etwa 16 Stunden. Der Ansatz wird danach auf 10 °C abgekühlt; das ausgefallene gelbe Reaktionsprodukt wird abgesaugt, mit wenig Ethanol gewaschen und unter reduziertem Druck getrocknet.

Man erhält die Verbindung der Formel

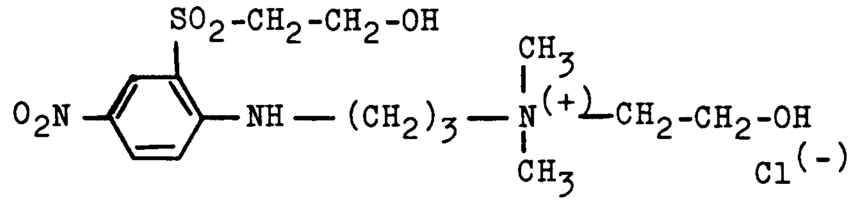

in Form gelber Kristalle mit einem Schmelzpunkt von 88-92 °C. Die zeigt folgende $^1$H-NMR-Daten:

δ = 8,42 ppm (d,1H); 8,26 ppm (dd,1H); 7,31 ppm (t,1H); 7,12 ppm (d,1H); 5,53 ppm (t,1H); 5,13 ppm (t,1H); 3,76 ppm (m,2H); 3,57 ppm (m,2H); 3,46 ppm (m,4H); 3,12 ppm (s,6H); 2,08 ppm (m,2H).

90,6 Teile dieser Nitroverbindung werden in 300 Volumenteilen Wasser gelöst und nach Zugabe von 12 Teilen Raney-Nickel mittels Wasserstoff unter einem Wasserstoffdruck von 10 bis 20 bar und bei einer Temperatur zwischen 25 und 60 °C reduziert. Nach Abtrennung des Katalysators kann die erhaltene Lösung der Anilinverbindung unter Stickstoffatmosphäre weiterverarbeitet werden, beispielsweise gemäß den Angaben des nachfolgenden Beispieles 3. Man kann die Anilinverbindung aber auch gemäß den Angaben des Beispieles A isolieren.

**Beispiel 1**

a) Zur Herstellung einer erfindungsgemäßen Triphendioxazinverbindung geht man von der unter Beispiel Ab) beschriebenen Anilinverbindung aus, wobei man vorteilhaft die aus der Reduktion erhaltenen Lösung der Anilinverbindung nach Abtrennung des Raney-Nickels in die Umsetzung mit Chloranil einsetzt. So gibt man unter Stickstoffatmosphäre in die als Filtrat erhaltene wäßrige Anilinlösung bei 50 °C innerhalb von 30 Minuten unter Einhaltung eines pH-Wertes von 6 mittels etwa 5,5 Teilen Natriumcarbonat 11,1 Teile Chloranil. Man rührt den Ansatz noch 2 Stunden bei 60 °C und einem pH-Wert von 6 nach, kühlt ihn sodann auf 20 °C ab und stellt mittels wäßriger Salzsäure einen pH-Wert von 3,7 bis 4,0 ein. Das ausgefallene braune Kondensationsprodukt wird abgesaugt und unter reduziertem Druck bei 60 °C getrocknet. Es besitzt folgende $^1$H-NMR-Daten:

δ = 9,58 ppm (s,2H,NH); 7,35 ppm (m,4H); 6,92 ppm (d,2H); 6,26 ppm (t,2H,NH); 5,00 ppm (t,2H,O-H); 3,7 ppm (m,4H); 3,42 ppm (m,8H); 3,29 ppm (m,4H); 3,10 ppm (s,18H); 2,02 ppm (m,4H).

b) 40 Teile des unter a) erhaltenen Kondensationsproduktes gibt man innerhalb 30 Minuten in ein 20 °C warmes Gemisch aus 125 Volumenteilen 20%igem Oleum und 130 Volumenteilen Schwefelsäure-Monohydrat. Der Ansatz wird etwa 2 1/2 Stunden bei 25 °C nachgerührt. Anschließend gibt man innerhalb von 30 Minuten bei einer Temperatur zwischen 22 und 24 °C 22,8 Teile Ammoniumperoxydisulfat, rührt den Ansatz noch 90 Minuten bei 20 °C nach und gießt ihn sodann langsam auf 900 Teile Eis. Nach etwa 1 Stunde wird die ausgefallene erfindungsgemäße Triphendioxazinverbindung abfiltriert und in 200 Teilen Wasser suspendiert. Die Suspension wird mittels Natriumhydrogencarbonat auf einen pH-Wert von 6 eingestellt, das Produkt wiederum abfiltriert und unter reduziertem Druck bei 50 °C getrocknet.

Man erhält das erfindungsgemäße Alkalimetallsalz (Natriumsalz) der Verbindung der Formel

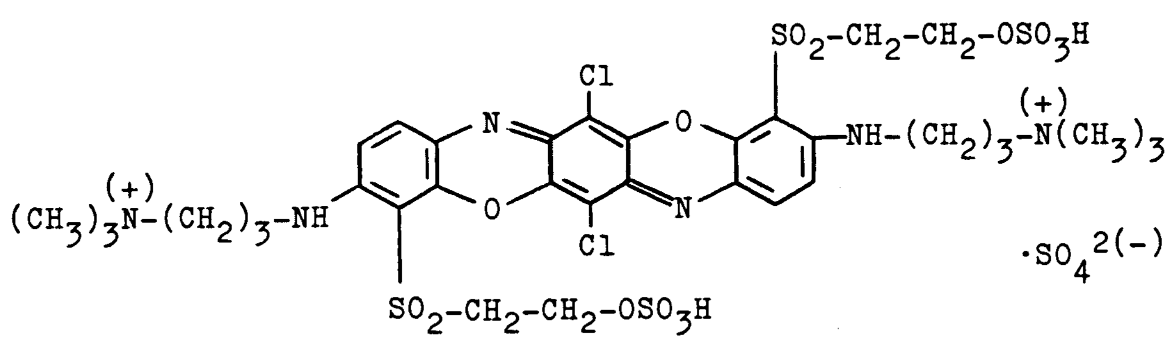

als elektrolytsalzhaltiges (vorwiegend natriumsulfathaltiges) Pulver (die jeweilige β-Sulfatoethylsulfonyl-Gruppe kann auch in der anderen ortho-Stellung zur Aminogruppe gebunden sein, befindet sich jedoch mit größerer Wahrscheinlichkeit in der in der obigen Formel angegebenen Stellung).

Diese erfindungsgemäße Verbindung besitzt sehr gute faserreaktive Farbstoffeigenschaften ($\lambda_{max}$ = 572 nm). Sie färbt die in der Beschreibung genannten Materialien, insbesondere Cellulosefasermaterialien, wie Baumwolle, nach den in der Technik üblichen und bekannten Verfahrensweisen der Applikation und Fixierung von faserreaktiven Farbstoffen in farbstarken, rotstichig blauen Tönen mit guten Echtheiten, wie insbesondere guter Lichtechtheit der trockenen oder feuchten, wie mit Trinkwasser befeuchteten, Färbungen, guter alkalischen Schweißlichtechtheit, Chlorbadewasserechtheit, Hypochloritechtheit, alkalischer Schweißechtheit, Naßliegeechtheit und Säurelagerbeständigkeit.

**Beispiel 2**

a) Etwa 500 Volumenteile einer wäßrigen Lösung der Anilinverbindung der Formel

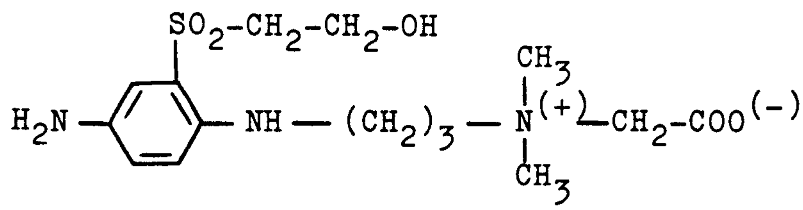

(s. Beispiel B) mit einem Gehalt von 0,224 Mol dieser Anilinverbindung wird auf 50 °C erwärmt und innerhalb von 30 Minuten unter Einhaltung eines pH-Wertes von 6 mit 28,2 Teilen 2,3,5,6-Tetrachlor-1,4-benzochinon versetzt. Man hält den Reaktionsansatz unter Rühren bei 65 °C noch während 2 Stunden, kühlt ihn dann auf 20 °C ab und stellt mittels Salzsäure einen pH-Wert von 3,7 bis 4,0 ein. Das ausgefallene braune Kondensationsprodukt wird unter reduziertem Druck getrocknet.
Es zeigt folgende $^1$H-NMR-Daten:

δ = 9,60 ppm (s,1H); 7,38 ppm (d,1H); 7,34 ppm (dd,1H); 6,92 ppm (d,1H); 6,26 ppm (m,1H); 5,00 ppm (s,br,1H); 3,69 ppm (m,2H); 3,45 ppm (m,2H); 3,35 ppm (m,2H); 3,17 ppm (s,2H); 3,12 ppm (m,2H); 2,73 ppm (s,6H); 2,00 ppm (m,2H).

b) 71,1 Teile des unter a) erhaltenen Kondensationsproduktes werden bei 25 °C in eine Mischung aus 200 Volumenteilen 20%igem Oleum und 208 Volumenteilen Schwefelsäure-Monohydrat gegeben. 38,1 Teile Natriumperoxidisulfat werden hinzugesetzt, und man hält die Temperatur während etwa drei Stunden bei 22 bis 25 °C. Anschließend gibt man den Ansatz auf 1500 Teile Eis. Die ausgefallene erfindungsgemäße Triphendioxazinverbindung wird abgesaugt, der saure Rückstand in 500 Volumenteilen Wasser suspendiert, und die Suspension wird mit etwa 28 Teilen Lithiumcarbonat auf einen pH-Wert von 5,8 gestellt. Das so erhaltene Alkalimetallsalz (Lithiumsalz) der erfindungsgemäßen Verbindung der Formel

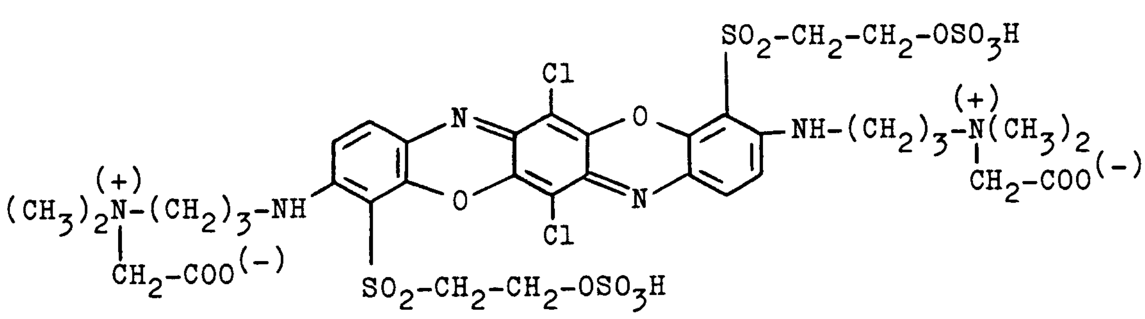

wird durch Abfiltrieren isoliert und unter reduziertem Druck getrocknet. Es besitzt nur einen geringen Elektrolytsalzgehalt.

Diese erfindungsgemäße Verbindung besitzt sehr gute faserreaktive Farbstoffeigenschaften ($\lambda_{max}$ = 567 nm). Sie färbt die in der Beschreibung genannten Materialien, insbesondere Cellulosefasermaterialien, wie

Baumwolle, nach den in der Technik üblichen und bekannten Verfahrensweisen der Applikation und Fixierung von faserreaktiven Farbstoffen in farbstarken, rotstichig blauen Tönen mit guten Echtheiten, wie insbesondere guter Lichtechtheit der trockenen oder feuchten, wie mit Trinkwasser befeuchteten, Färbungen, guter alkalischen Schweißlichtechtheit, Chlorbadewasserechtheit, Hypochloritechtheit, alkalischer Schweißechtheit, Naßliegeechtheit und Säurelagerbeständigkeit.

**Beispiel 3**

Etwa 300 Volumenteile einer wäßrigen Lösung von 3-(β-Hydroxyethylsulfonyl)-4-N-[γ-(N',N'-dimethyl-N'-β'-hydroxyethylammonium)-propyl]-amino-anilin-hydrochlorid mit einem Gehalt von 0,205 Mol dieser Anilinverbindung werden mit 25 Teilen 2,3,5,6-Tetrachlor-1,4-benzochinon versetzt. Die Kondensationsreaktion erfolgt bei 60 °C und einem pH-Wert von 6. Anschließend kühlt man den Ansatz auf 20 °C ab, stellt mittels Salzsäure einen pH-Wert von 3,6 ein und saugt das ausgefallene braune Kondensationsprodukt ab.

67,5 Teile des Kondensationsproduktes werden bei 25 °C in einer Mischung aus 200 Volumenteilen 20%igem Oleum und 208 Volumenteilen Schwefelsäure-Monohydrat gelöst. 36,5 Teile Ammoniumperoxidisulfat werden langsam unter Einhalteung einer Temperatur von 20 bis 25 °C zugegeben, und der Reaktionsansatz wird noch etwa 12 Stunden bei dieser Temperatur nachgerührt. Man gibt ihn anschließend auf 1500 Teile Eis und saugt die ausgefallene erfindungsgemäße Triphendioxazinverbindung ab. Der Rückstand wird in 300 Teilen Wasser suspendiert und mittels etwa 24 Teilen Natriumcarbonat bei einem pH-Wert von 4,2 bis 4,5 gelöst. Nach der üblichen Klärung der Lösung wird sie bei 60 °C unter reduziertem Druck eingedampft oder sprühgetrocknet.

Man erhält das erfindungsgemäße Alkalimetallsalz (Natriumsalz) der Verbindung der Formel

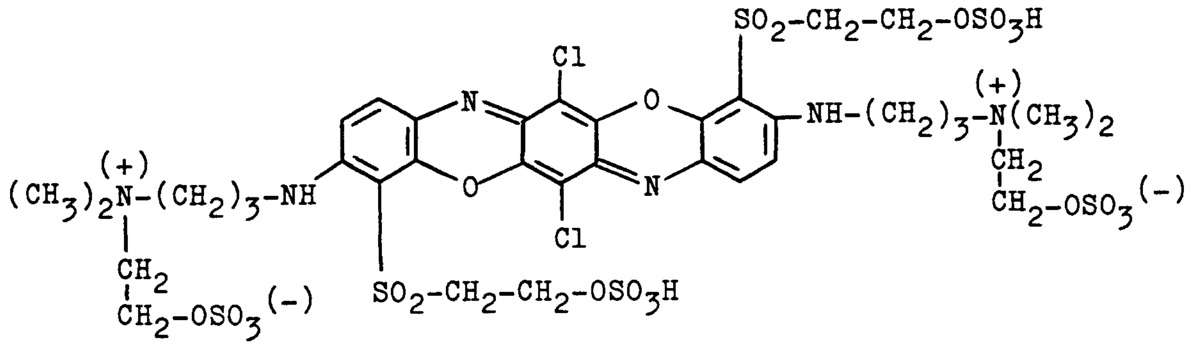

als elektrolytsalzhaltiges (vorwiegend natriumsulfathaltiges) Pulver (die jeweilige β-Sulfatoethylsulfonyl-Gruppe kann auch in der anderen ortho-Stellung zur Aminogruppe gebunden sein, befindet sich jedoch mit größerer Wahrscheinlichkeit in der in der obigen Formel angegebenen Stellung).

Diese erfindungsgemäße Verbindung besitzt sehr gute faserreaktive Farbstoffeigenschaften ($\lambda_{max}$ = 574 nm). Sie färbt die in der Beschreibung genannten Materialien, insbesondere Cellulosefasermaterialien, wie Baumwolle, nach den in der Technik üblichen und bekannten Verfahrensweisen der Applikation und Fixierung von faserreaktiven Farbstoffen in farbstarken, rotstichig blauen Tönen mit guten Echtheiten, wie insbesondere guter Lichtechtheit der trockenen oder feuchten, wie mit Trinkwasser befeuchteten, Färbungen, guter alkalischen Schweißlichtechtheit, Chlorbadewasserechtheit, Hypochloritechtheit, alkalischer Schweißechtheit, Naßliegeechtheit und Säurelagerbeständigkeit.

**Beispiele 4 bis 39**

In den nachfolgenden Tabellenbeispielen sind weitere erfindungsgemäße Triphendioxazinverbindungen mit Hilfe der Formelglieder der allgemeinen Formel (A)

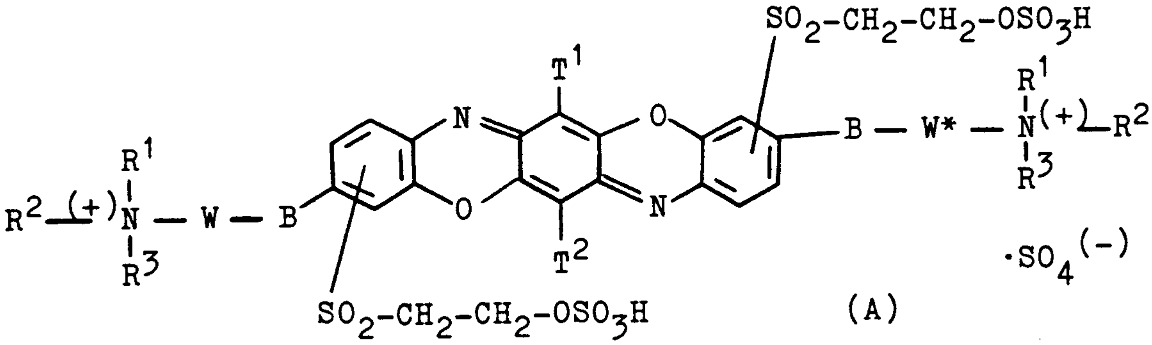

(A)

beschrieben, wobei W den in der Tabelle "spiegelbildlich" geschriebenen Rest von W* darstellt. Die erfindungsgemäßen Verbindungen lassen sich in erfindungsgemäßer Weise, so beispielsweise analog dem obigen Ausführungsbeispiel, aus der entsprechenden aus dem jeweiligen Tabellenbeispiel ersichtlichen Anilinverbindung entsprechend der allgemeinen Formel (3a)

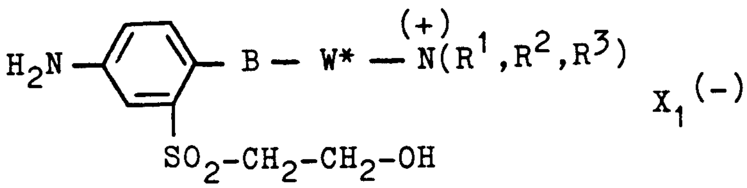

(3a)

und der in dem jeweiligen Tabellenbeispiel angegebenen Benzochinonverbindung herstellen. Sie besitzen ebenfalls sehr gute faserreaktive Farbstoffeigenschaften und liefern, insbesondere auf Cellulosefasermaterialien, farbstarke Färbungen und Drucke mit guten Echtheiten in dem in dem jeweiligen Tabellenbeispiel angegebenen Farbton.

| Bsp. | Verbindung der Formel (1) Rest -B- | Rest $-W^*-\overset{(+)}{N}(R^1,R^2,R^3)$ | $T^1 = T^2$ | Ausgangs-benzochinon | Farbton |
|---|---|---|---|---|---|
| 4 | -NH- | γ-[N,N-Dimethyl-N-(ω'-hydroxy-pentyl)-ammonium]-propyl | Chlor | Chloranil | rotstichig blau |
| 5 | -NH- | γ-[N,N-Dimethyl-N-ethyl-ammonium]-propyl | Chlor | dito | dito |
| 6 | -NH- | γ-(Trimethylammonium)-propyl | Chlor | dito | dito |
| 7 | -NH- | γ-[N,N-Dimethyl-N-n-butyl-ammonium]-propyl | Chlor | dito | dito |
| 8 | -NH- | γ-[N,N-Dimethyl-N-(ß'-acetyloxy-ethyl)-ammonium]-propyl | Chlor | dito | dito |
| 9 | -NH- | γ-[N,N-Dimethyl-N-(ß'-carbethoxy-methyl)-ammonium]-propyl | Chlor | dito | dito |
| 10 | -NH- | γ-[N,N-Dimethyl-N-ß'-benzyl-ammonium]-propyl | Chlor | dito | dito |
| 11 | -NH- | γ-[N,N-Dimethyl-N-ß'-phenyl-ammonium]-propyl | Chlor | dito | dito |
| 12 | -NH- | γ-[N,N-Dimethyl-N-(ß'-carboxy-ethyl)-ammonium]-propyl | Chlor | dito | dito |
| 13 | -NH- | γ-[N,N-Dimethyl-N-ethyl-ammonium]-propyl | Chlor | dito | dito |
| 14 | -NH- | γ-[N,N-Dimethyl-N-(γ'-hydroxy-propyl)-ammonium]-propyl | Chlor | dito | dito |
| 15 | -NH- | γ-[N,N-Dimethyl-N-(δ'-hydroxy-butyl)-ammonium]-propyl | Chlor | dito | dito |

| Bsp. | Rest -B- | Verbindung der Formel (1) Rest $-W^{*}-\overset{(+)}{N}(R^1,R^2,R^3)$ | $T^1 = T^2$ | Ausgangs-benzochinon | Farbton |
|---|---|---|---|---|---|
| 16 | -NH- | γ-[N,N-Dimethyl-N-(ω'-hydroxy-hexyl)-ammonium]-propyl | Chlor | Chloranil | rotstichig blau |
| 17 | -NH- | ß-(Trimethylammonium)-ethyl | Chlor | dito | dito |
| 18 | $-N(CH_3)-$ | ß-(Trimethylammonium)-ethyl | Chlor | dito | dito |
| 19 | -O- | ß-[N,N-Dimethyl-N-carboxymethyl-ammonium]-ethyl | Chlor | dito | blaustichig rot |
| 20 | 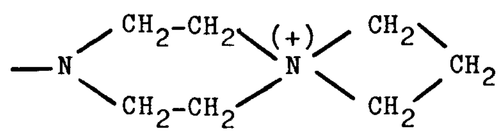 | | Chlor | dito | rotstichig blau |
| 21 | $-N(CH_3)-$ | ß-(N-Methyl-benzopyrrolidinium)-ethyl | Chlor | dito | dito |
| 22 | -NH- | ß-{ß'-[N,N-Dimethyl-N-(ß"-hydroxy-ethyl)-ammonium]-ethylthio}-ethyl | Chlor | dito | dito |
| 23 | -NH- | ß-{ß'-[(N,N-Dimethyl-N-carboxymethyl)-ammonium-ethoxy]-ethyl | Chlor | dito | dito |
| 24 | -NH- | γ-[N,N-Diethyl-N-methyl-ammonium]-propyl | Chlor | dito | dito |
| 25 | -NH- | γ-[N,N-Diethyl-N-carboxymethyl-ammonium]-propyl | Chlor | dito | dito |
| 26 | -NH- | γ-[N,N-Diethyl-N-(ß'-hydroxy-ethyl)-ammonium]-propyl | Chlor | dito | dito |

| Bsp. | Verbindung der Formel (1) Rest -B- | Rest $-W^*-\overset{(+)}{N}(R^1,R^2,R^3)$ | $T^1 = T^2$ | Ausgangs-benzochinon | Farbton |
|---|---|---|---|---|---|
| 27 | -NH- | γ-[N,N-Dimethyl-N-(ß'-hydroxy-ethyl)-ammonium]-ß,ß-dimethyl-propyl | Chlor | dito | rotstichig blau |
| 28 | -NH- | γ-[N,N-Dimethyl-N-carboxymethyl-ammonium]-ß,ß-dimethyl-propyl | Chlor | dito | dito |
| 29 | -NH- | γ-[ß'-(N,N-Dimethyl-N-carboxymethyl-ammonium)-ethylsulfonyl]-propyl | Chlor | dito | dito |
| 30 | N,N-Bis-{ß-[ß'-(N,N-dimethyl-N-ß-hydroxyethyl-ammonium)-ethylsulfonyl]-ethyl}-amino | | Chlor | dito | dito |
| 31 | -NH- | γ-[N,N-Dimethyl-N-carboxymethyl-ammonium]-propyl | Methyl | 2,5-Dichlor-3,6-dimethyl-1,4-benzochinon | dito |
| 32 | -NH- | dito | Methoxy | 2,5-Dichlor-3,6-dimethoxy-1,4-benzochinon | dito |
| 33 | -NH- | dito | Acetylamino | 2,5-Dichlor-3,6-acetylamino-1,4-benzochinon | dito |
| 34 | -NH- | dito | Phenoxy | 2,3,5,6-Tetra-phenoxy-1,4-benzochinon | dito |
| 35 | -NH- | γ-[N,N-Diethyl-N-(ß-hydroxy-ethyl)-ammonium]-propyl | Methyl | 2,5-Dimethyl-1,4-benzochinon | dito |
| 36 | -NH- | dito | Wasserstoff | 1,4-Benzochinon | dito |

Verbindung der Formel (1)

| Bsp. | Rest -B- | Rest $-W^{*}-\overset{(+)}{N}(R^1,R^2,R^3)$ | $T^1 = T^2$ | Ausgangs-benzochinon | Farbton |
|---|---|---|---|---|---|
| 37 | -NH- | dito | Carbamoyl | 2,5-Dibrom-3,6-di-carbonamido-1,4-benzochinon | rotstichig blau |
| 38 | -NH- | dito | Fluor | 2,3,5,6-Tetrafluor-1,4-benzochinon | dito |
| 39 | -NH- | dito | Brom | 2,3,5,6-Tetrabrom-1,4-benzochinon | dito |

**Patentansprüche**

**Patentansprüche für folgende Vertragsstaaten : BE, CH, LI, DE, FR, GB, IT**

1. Wasserlösliche Triphendioxazin-Verbindungen mit quartären Ammoniumgruppen entsprechend der allgemeinen Formel (1)

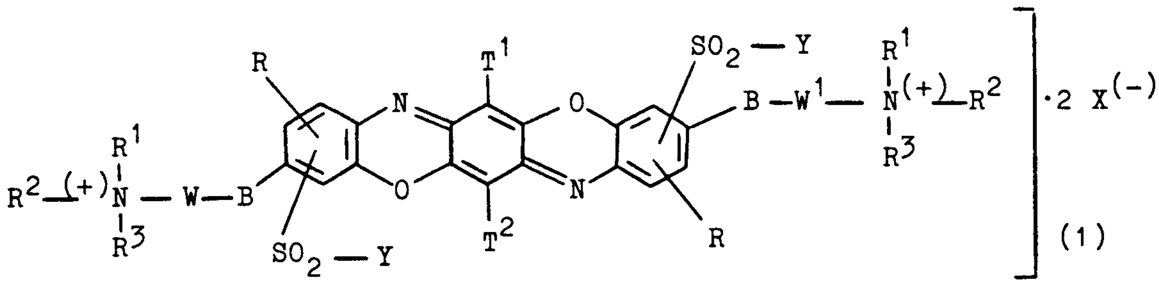

(1)

in welcher bedeuten:

| | |
|---|---|
| B | ist ein Sauerstoff- oder Schwefelatom oder eine Aminogruppe der Formel -NH- oder -N(R')- , in welcher |
| R' | eine Alkylgruppe von 1 bis 4 C-Atomen ist, die substituiert sein kann, oder eine der Bedeutungen der Gruppe $X^{(-)}[R^3,R^2,R^1]N^{(+)}$-W- bzw. -$W^1$-$^{(+)}N[R^1,R^2,R^3]X^{(-)}$ mit W, $W^1$, $R^1$, $R^2$, $R^3$ und $X^{(-)}$ der nachstehend angegebenen Definition besitzt oder zusammen mit $R^1$ einen Alkylenrest von 2 bis 4 C-Atomen bildet; |
| $R^1$ | ist eine geradkettige oder verzweigte Alkylgruppe von 1 bis 6 C-Atomen, bevorzugt von 1 bis 4 C-Atomen, die substituiert sein kann; |
| $R^2$ | hat eine der Bedeutungen von $R^1$ und |
| $R^3$ | hat eine der Bedeutungen von $R^1$ oder |
| $R^2$ und $R^3$ | bilden zusammen mit dem positiv geladenen Stickstoffatom und gegebenenfalls einem weiteren Heteroatom einen heterocyclischen Rest, wobei an den heterocyclischen Rest gegebenenfalls ein Benzorest ankondensiert sein kann; |
| $X^{(-)}$ | ist das Moläquivalent eines farblosen Anions (wobei im Falle, daß einer der Substituenten von $R^1$, $R^2$ und $R^3$ eine saure Gruppe enthält, diese mit dem Ammoniumstickstoff ein inneres Salz zu bilden vermag, so daß hier die Bedeutung von $X^{(-)}$ völlig entfällt); |
| W | ist ein Alkylenrest von 2 bis 6 C-Atomen, der durch 1 oder 2 Substituenten aus der Gruppe Sulfato, Phosphato, Carboxy, Sulfo, Phenyl, Monosulfophenyl oder Disulfophenyl substituiert sein kann, oder ist ein Alkylenrest von 4 bis 12 C-Atomen ist, der durch 1 bis 5 Heterogruppen unterbrochen ist, die aus den Gruppen -O- , - S- , -$SO_2$-, -CO- , 1,4-Piperidino, -NH- und -N($R^o$)- , worin $R^o$ eine Alkygruppe von 1 bis 6 C-Atomen ist, die durch eine Sulfo-, Sulfato-, Carboxy-, Phosphato-, Phenyl-, Monosulfophenyl- oder Disulfophenyl-Gruppe substituiert sein kann, oder eine Alkanoylgruppe von 2 bis 5 C-Atomen bedeutet, ausgewählt sind; |
| $W^1$ | hat eine der Bedeutungen von W; |
| Y | ist die Vinylgruppe oder die Ethylgruppe, die in β-Stellung einen durch ein Alkali eliminierbaren Substituenten enthält, wobei die Gruppe -$SO_2$-Y bevorzugt in ortho-Stellung zum Rest B an den Benzolkern gebunden ist; |
| R | ist ein Wasserstoffatom oder eine Sulfogruppe; |
| $T^1$ | ist ein Wasserstoffatom oder ein Halogenatom, eine Cycloalkylgruppe von 5 bis 8 C-Atomen, eine Aralkyloxygruppe, eine Alkoxygruppe von 1 bis 4 C-Atomen, eine Aryloxygruppe, eine Alkylgruppe von 1 bis 4 C-Atomen, eine Arylgruppe, eine Aralkylgruppe, eine Cyangruppe, eine Carboxygruppe, eine Carbalkoxygruppe von 2 bis 5 C-Atomen, eine Arylaminogruppe, eine Carbamoylgruppe, eine N-Alkylcarbamoyl-Gruppe oder N,N-Dialkyl-carbamoyl-Gruppe mit Alkylresten von jeweils 1 bis 4 C-Atomen, eine N-Aryl-carbamoyl-Gruppe, eine Alkanoylaminogruppe von 2 bis 5 C-Atomen oder eine Aroylaminogruppe, wobei die Arylreste in diesen genannten Substituenten bevorzugt Phenylreste sind, die noch durch 1 oder 2 Substituenten aus der Gruppe Halogen, Nitro, Alkyl von 1 bis 4 C-Atomen, Alkoxy von |

1 bis 4 C-Atomen, Carboxy und Sulfo substituiert sein können;

$T^2$ hat eine der für $T^1$ angegebenen Bedeutungen;

die einzelnen, auch zweifach erscheinenden Formelglieder, können zueinander gleiche oder voneinander verschiedene Bedeutungen besitzen.

**2.** Verbindung nach Anspruch 1, dadurch gekennzeichnet, daß $T^1$ oder $T^2$ oder beide jedes ein Wasserstoffatom, eine Alkanoylaminogruppe von 2 bis 5 C-Atomen, eine Phenoxygruppe, die substituiert sein kann, eine Alkoxygruppe von 1 bis 4 C-Atomen oder eine Alkylgruppe von 1 bis 4 C-Atomen oder bevorzugt ein Chloratom oder Bromatom bedeuten.

**3.** Verbindung nach Anspruch 1 oder 2, dadurch gekennzeichnet, daß $R^1$, $R^2$ und $R^3$ jedes, zueinander gleich oder voneinander verschieden, ein Alkylrest von 1 bis 4 C-Atomen ist, der durch 1 oder 2 Substituenten aus der Gruppe Carboxy, Sulfo, Sulfato, Phosphato, Alkoxy von 1 bis 4 C-Atomen, Alkanoyloxy von 2 bis 5 C-Atomen, Phenyl und durch 1 oder 2 Sulfogruppen substituiertes Phenyl substituiert sein kann.

**4.** Verbindung nach Anspruch 1 oder 2, dadurch gekennzeichnet, daß $R^1$, $R^2$ und $R^3$ jedes, zueinander gleich oder voneinander verschieden, Methyl, Ethyl, 1-Propyl, 2-Propyl, 1-Butyl, 3- oder 4-Sulfobenzyl, $\beta$-Sulfato-ethyl, $\beta$-Phosphato-ethyl, Carboxymethyl, $\beta$-Sulfo-ethyl, $\omega$-Sulfato-hexyl, $\gamma$-Sulfato-propyl, $\beta$-Carboxy-ethyl oder $\beta$-Acetyloxy-ethyl bedeutet.

**5.** Verbindung nach mindestens einem der Ansprüche 1 bis 4, dadurch gekennzeichnet, daß 2 $X^{(-)}$ zusammen das Sulfation bedeuten.

**6.** Verbindung nach mindestens einem der Ansprüche 1 bis 5, dadurch gekennzeichnet, daß B für die Aminogruppe -NH-steht.

**7.** Verbindung nach mindestens einem der Ansprüche 1 bis 6, dadurch gekennzeichnet, daß Y die $\beta$-Sulfatoethyl-Gruppe bedeutet.

**8.** Verbindung nach mindestens einem der Ansprüche 1 bis 7, dadurch gekennzeichnet, daß R ein Wasserstoffatom bedeutet.

**9.** Verbindung nach mindestens einem der Ansprüche 1 bis 8, dadurch gekennzeichnet, daß $T^1$ und $T^2$ beide für ein Chloratom stehen.

**10.** Verbindung nach mindestens einem der Ansprüche 1 bis 9, dadurch gekennzeichnet, daß $W^1$ der 1,2-Ethylen-, 1,3-Propylen- oder 2-Sulfato-1,3-propylen-Rest oder ein Rest der Formel (a), (b), (d), ($j_1$) oder ($k_1$)

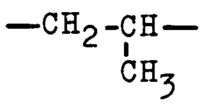 (a) 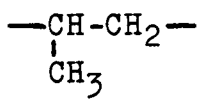 (b) 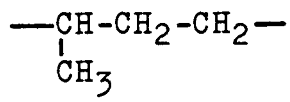 (d)

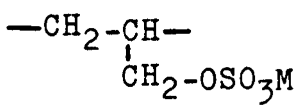 ($j_1$) $-CH_2-CH_2-(O-CH_2-CH_2)_n-$ ($k_1$)

worin M ein Wasserstoffatom oder ein Alkalimetall ist und n für eine Zahl von 1 bis 5 steht, ist.

**11.** Verbindung nach mindestens einem der Ansprüche 1 bis 10, dadurch gekennzeichnet, daß W der 1,2-Ethylen-, 1,3-Propylen- oder 2-Sulfato-1,3-propylen-Rest oder ein Rest der Formel (a), (b), (e), ($j_2$) oder ($k_2$)

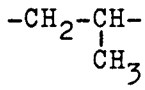 (a) 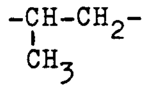 (b) 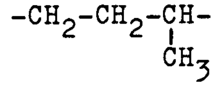 (e)

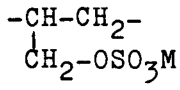 ($j_2$) $-(CH_2-CH_2-O)_n-CH_2-CH_2-$ ($k_2$)

worin M ein Wasserstoffatom oder ein Alkalimetall ist und n für eine Zahl von 1 bis 5 steht, ist.

**12.** Verbindung nach mindestens einem der Ansprüche 1 bis 11, dadurch gekennzeichnet, daß $R^1$ und $R^2$ beide für die Methyl- oder Ethylgruppe stehen und $R^3$ die Methylgruppe oder die Carboxymethyl-, β-Sulfatoethyl- oder β-Sulfoethyl-Gruppe oder eine durch eine Sulfatogruppe substituierte n-Propylgruppe ist.

**13.** Verfahren zur Herstellung einer in Anspruch 1 genannten und definierten Verbindung der allgemeinen Formel (1), dadurch gekennzeichnet, daß man eine Verbindung der allgemeinen Formel (2)

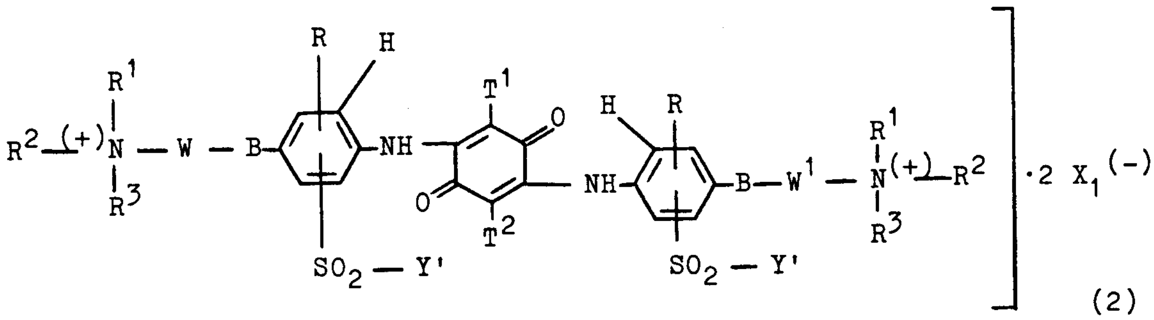

(2)

(in welcher Y' eine der Bedeutungen von Y gemäß Anspruch 1 besitzt oder die β-Hydroxyethyl-Gruppe ist, $X_1^{(-)}$ das Moläquivalent eines beliebigen Anions bedeuten und $R^1$, $R^2$, $R^3$, B, W, $W^1$, R, $T^1$ und $T^2$ die in Anspruch 1 genannten Bedeutungen haben, wobei diese als substituierte Alkylgruppen auch hydroxysubstituierte Alkylgruppen sein können und die Gruppen $-SO_2-Y'$ bevorzugt in ortho-Stellung zur Gruppe B gebunden sind) in einem inerten oder sauren Medium und gegebenenfalls in Gegenwart eines Oxidationsmittels zur Triphendioxazin-Verbindung der Formel (1) cyclisiert.

**14.** Verwendung einer in Anspruch 1 genannten und definierten Verbindung der allgemeinen Formel (1) zum Färben (einschließlich Bedrucken) von hydroxy- und/oder carbonamidgruppenhaltigem Material, insbesondere Fasermaterial.

**15.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mit Hilfe eines alkalisch wirkenden Mittels fixiert, dadurch gekennzeichnet, daß man als Farbstoff eine Verbindung der in Anspruch 1 genannten und definierten allgemeinen Formel (1) einsetzt.

**16.** Verbingung der allgemeinen Formel

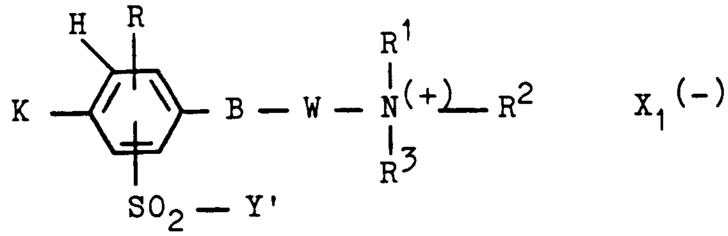

in welcher

| | |
|---|---|
| K | die Nitrogruppe oder die Aminogruppe bedeutet, |
| Y' | die Vinylgruppe oder eine Ethylgruppe, die in β-Stellung eine durch ein Alkali eliminierbaren Substituenten enthält, oder bevorzugt die β-Hydroxyethyl-Gruppe ist, |
| $X_1^{(-)}$ | das Moläquivalent eines beliebigen Anions bedeutet und |
| R, B, W, $R^1$, $R^2$ und $R^3$ | eine der in Anspruch 1 genannten Bedeutungen haben, wobei diese als substituierte Alkylgruppen auch hydroxysubstituierte Alkylgruppen sein können und die Gruppe $-SO_2-Y'$ bevorzugt in ortho-Stellung zur Gruppe B gebunden ist. |

**17.** Verbindung nach Anspruch 16, dadurch gekennzeichnet, daß B eine Gruppe der Formel -NH- ist, W den Ethylen- oder n-Propylen- oder den 2-Sulfato-1,3-propylen- oder 2-Hydroxy-1,3-propylen-Rest darstellt, R ein Wasserstoffatom bedeutet, Y' für die β-Hydroxyethyl-Gruppe steht, $R^1$ und $R^2$ beide für die Methyl- oder Ethylgruppe stehen und $R^3$ die Methylgruppe oder die Carboxymethyl-, β-Sulfatoethyl- oder β-Hydroxyethyl-, β-Sulfoethyl-Gruppe oder eine durch eine Sulfatogruppe substituierte n-Propylgruppe ist.

**18.** Verfahren zur Herstellung einer in Anspruch 16 genannten und definierten Verbindung, dadurch gekennzeichnet, daß man eine Verbindung der allgemeinen Formel (5)

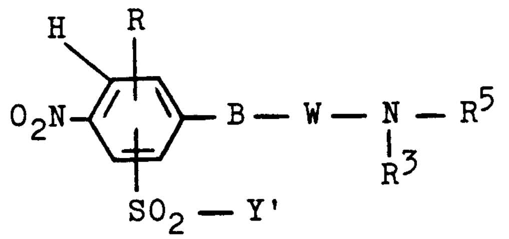

(5)

in welcher Y', B, W, R und $R^3$ die in Anspruch 17 genannten Bedeutungen haben und $R^5$ für ein Wasserstoffatom steht oder eine der Bedeutungen von $R^2$ besitzt, mit einem Alkylierungsmittel umsetzt und gegebenfalls die Nitrogruppe zur Aminogruppe reduziert.

**19.** Verwendung einer Verbindung von Anspruch 16 zur Synthese von faserreaktiven Farbstoffen, insbesondere von Triphendioxazin-Verbindungen der allgemeinen Formel (1) gemäß Anspruch 1.

**Patentansprüche für folgenden Vertragsstaat : ES**

**1.** Verfahren zur Herstellung einer wasserlöslichen Triphendioxazin-Verbindung mit quartären Ammoniumgruppen entsprechend der allgemeinen Formel (1)

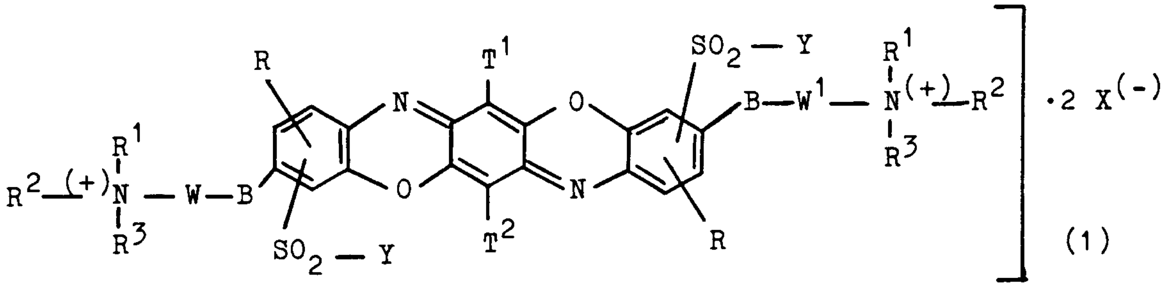

(1)

in welcher bedeuten:

| | |
|---|---|
| B | ist ein Sauerstoff- oder Schwefelatom oder eine Aminogruppe der Formel -NH- oder -N(R′)- , in welcher |
| R′ | eine Alkylgruppe von 1 bis 4 C-Atomen ist, die substituiert sein kann, oder eine der Bedeutungen der Gruppe $X^{(-)}[R^3,R^2,R^1]N^{(+)}$-W- bzw. -$W^1$-$^{(+)}N[R^1,R^2,R^3]X^{(-)}$ mit W, $W^1$, $R^1$, $R^2$, $R^3$ und $X^{(-)}$ der nachstehend angegebenen Definition besitzt oder zusammen mit $R^1$ einen Alkylenrest von 2 bis 4 C-Atomen bildet; |
| $R^1$ | ist eine geradkettige oder verzweigte Alkylgruppe von 1 bis 6 C-Atomen, bevorzugt von 1 bis 4 C-Atomen, die substituiert sein kann; |
| $R^2$ | hat eine der Bedeutungen von $R^1$ und |
| $R^3$ | hat eine der Bedeutungen von $R^1$ oder |
| $R^2$ und $R^3$ | bilden zusammen mit dem positiv geladenen Stickstoffatom und gegebenenfalls einem weiteren Heteroatom einen heterocyclischen Rest, wobei an den heterocyclischen Rest gegebenenfalls ein Benzorest ankondensiert sein kann; |
| $X^{(-)}$ | ist das Moläquivalent eines farblosen Anions (wobei im Falle, daß einer der Substituenten von $R^1$, $R^2$ und $R^3$ eine saure Gruppe enthält, diese mit dem Ammoniumstickstoff ein inneres Salz zu bilden vermag, so daß hier die Bedeutung von $X^{(-)}$ völlig entfällt); |
| W | ist ein Alkylenrest von 2 bis 6 C-Atomen, der durch 1 oder 2 Substituenten aus der Gruppe Sulfato, Phosphato, Carboxy, Sulfo, Phenyl, Monosulfophenyl oder Disulfophenyl substituiert sein kann, oder ein Alkylenrest von 4 bis 12 C-Atomen ist, der durch 1 bis 5 Heterogruppen unterbrochen ist, die aus den Gruppen -O- , -S- , -$SO_2$- , -CO- , 1,4-Piperidino, -NH- und -N($R^o$)- , worin $R^o$ eine Alkylgruppe von 1 bis 6 C-Atomen ist, die durch eine Sulfo-, Sulfato-, Carboxy-, Phosphato-, Phenyl-, Monosulfophenyl- oder Disulfophenyl-Gruppe substituiert sein kann, oder eine Alkanoylgruppe von 2 bis 5 C-Atomen bedeutet, ausgewählt sind; |
| $W^1$ | hat eine der Bedeutungen von W; |
| Y | ist die Vinylgruppe oder die Ethylgruppe, die in β-Stellung einen durch ein Alkali eliminierbaren Substituenten enthält, wobei die Gruppe -$SO_2$-Y bevorzugt in ortho-Stellung zum Rest B an den Benzolkern gebunden ist; |
| R | ist ein Wasserstoffatom oder eine Sulfogruppe; |
| $T^1$ | ist ein Wasserstoffatom oder ein Halogenatom, eine Cycloalkylgruppe von 5 bis 8 C-Atomen, eine Aralkyloxygruppe, eine Alkoxygruppe von 1 bis 4 C-Atomen, eine Aryloxygruppe, eine Alkylgruppe von 1 bis 4 C-Atomen, eine Arylgruppe, eine Aralkylgruppe, eine Cyangruppe, eine Carboxygruppe, eine Carbalkoxygruppe von 2 bis 5 C-Atomen, eine Arylaminogruppe, eine Carbamoylgruppe, eine N-Alkylcarbamoyl-Gruppe oder N,N-Dialkyl-carbamoyl-Gruppe mit Alkylresten von jeweils 1 bis 4 C-Atomen, eine N-Aryl-carbamoyl-Gruppe, eine Alkanoylaminogruppe von 2 bis 5 C-Atomen oder eine Aroylaminogruppe, wobei die Arylreste in diesen genannten Substituenten bevorzugt Phenylreste sind, die noch durch 1 oder 2 Substituenten aus der Gruppe Halogen, Nitro, Alkyl von 1 bis 4 C-Atomen, Alkoxy von 1 bis 4 C-Atomen, Carboxy und Sulfo substituiert sein können; |
| $T^2$ | hat eine der für $T^1$ angegebenen Bedeutungen; |

die einzelnen, auch zweifach erscheinenden Formelglieder, können zueinander gleiche oder voneinander verschiedene Bedeutungen besitzen;
dadurch gekennzeichnet, daß man
eine Verbindung der allgemeinen Formel (2)

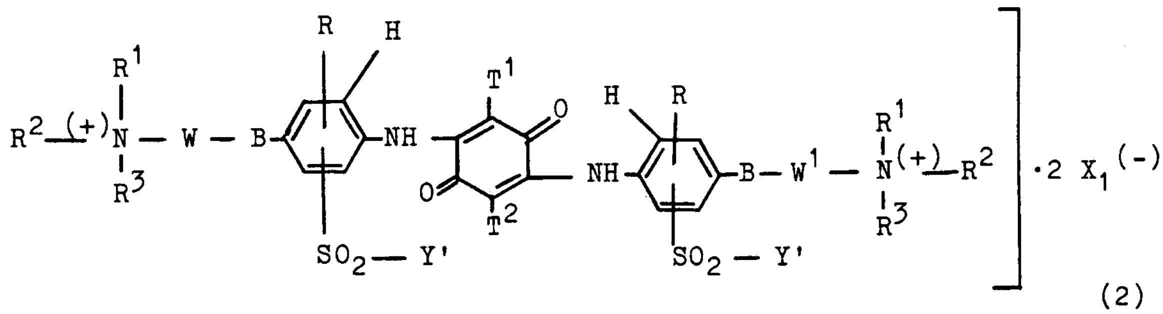

(2)

(in welcher Y′ eine der Bedeutungen von Y besitzt oder die $\beta$-Hydroxyethyl-Gruppe ist, $X_1^{(-)}$ das Moläquivalent eines beliebigen Anions bedeutet und $R^1$, $R^2$, $R^3$, B, W, $W^1$, R, $T^1$ und $T^2$ die oben genannten Bedeutungen haben, wobei diese als substituierte Alkylgruppen auch hydroxysubstituierte Alkylgruppen sein können und die Gruppen $-SO_2-Y'$ bevorzugt in ortho-Stellung zur Gruppe B gebunden sind) in einem inerten oder sauren Medium und gegebenenfalls in Gegenwart eines Oxidationsmittels zur Triphendioxazin-Verbindung der Formel (1) cyclisiert.

**2.** Verfahren nach Anspruch 1, dadurch gekennzeichnet, daß $T^1$ oder $T^2$ oder beide jedes ein Wasserstoffatom, eine Alkanoylaminogruppe von 2 bis 5 C-Atomen, eine Phenoxygruppe, die substituiert sein kann, eine Alkoxygruppe von 1 bis 4 C-Atomen oder eine Alkylgruppe von 1 bis 4 C-Atomen oder bevorzugt ein Chloratom oder Bromatom bedeuten.

**3.** Verfahren nach Anspruch 1 oder 2, dadurch gekennzeichnet, daß $R^1$, $R^2$ und $R^3$ jedes, zueinander gleich oder voneinander verschieden, ein Alkylrest von 1 bis 4 C-Atomen ist, der durch 1 oder 2 Substituenten aus der Gruppe Carboxy, Sulfo, Sulfato, Phosphato, Alkoxy von 1 bis 4 C-Atomen, Alkanoyloxy von 2 bis 5 C-Atomen, Phenyl und durch 1 oder 2 Sulfogruppen substituiertes Phenyl substituiert sein kann.

**4.** Verfahren nach Anspruch 1 oder 2, dadurch gekennzeichnet, daß $R^1$, $R^2$ und $R^3$ jedes, zueinander gleich oder voneinander verschieden, Methyl, Ethyl, 1-Propyl, 2-Propyl, 1-Butyl, 3- oder 4-Sulfobenzyl, $\beta$-Sulfato-ethyl, $\beta$-Phosphato-ethyl, Carboxymethyl, $\beta$-Sulfo-ethyl, $\omega$-Sulfato-hexyl, $\gamma$-Sulfato-propyl, $\beta$-Carboxy-ethyl oder $\beta$-Acetyloxy-ethyl bedeutet.

**5.** Verfahren nach mindestens einem der Ansprüche 1 bis 4, dadurch gekennzeichnet, daß 2 $X^{(-)}$ zusammen das Sulfation bedeuten.

**6.** Verfahren nach mindestens einem der Ansprüche 1 bis 5, dadurch gekennzeichnet, daß B für die Aminogruppe -NH-steht.

**7.** Verfahren nach mindestens einem der Ansprüche 1 bis 6, dadurch gekennzeichnet, daß Y die $\beta$-Sulfatoethyl-Gruppe bedeutet.

**8.** Verfahren nach mindestens einem der Ansprüche 1 bis 7, dadurch gekennzeichnet, daß R ein Wasserstoffatom bedeutet.

**9.** Verfahren nach mindestens einem der Ansprüche 1 bis 8, dadurch gekennzeichnet, daß $T^1$ und $T^2$ beide für ein Chloratom stehen.

**10.** Verfahren nach mindestens einem der Ansprüche 1 bis 9, dadurch gekennzeichnet, daß $W^1$ der 1,2-Ethylen-, 1,3-Propylen- oder 2-Sulfato-1,3-propylen-Rest oder ein Rest der Formel (a), (b), (d), ($j_1$) oder ($k_1$)

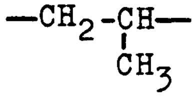 (a) 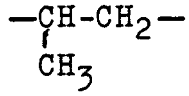 (b) 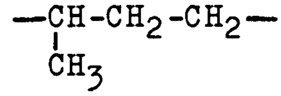 (d)

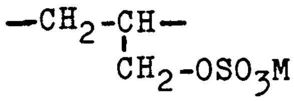 ($j_1$) $-CH_2-CH_2-(O-CH_2-CH_2)_n-$ ($k_1$)

worin M ein Wasserstoffatom oder ein Alkalimetall ist und n für eine Zahl von 1 bis 5 steht, ist.

**11.** Verfahren nach mindestens einem der Ansprüche 1 bis 10, dadurch gekennzeichnet, daß W der 1,2-Ethylen-, 1,3-Propylen- oder 2-Sulfato-1,3-propylen-Rest oder ein Rest der Formel (a), (b), (e), ($j_2$) oder ($k_2$)

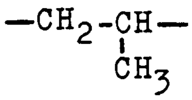 (a) 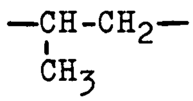 (b) 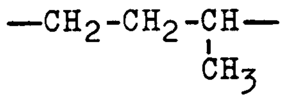 (e)

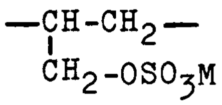 ($j_2$) $-(CH_2-CH_2-O)_n-CH_2-CH_2-$ ($k_2$)

worin M ein Wasserstoffatom oder ein Alkalimetall ist und n für eine Zahl von 1 bis 5 steht, ist.

**12.** Verfahren nach mindestens einem der Ansprüche 1 bis 11, dadurch gekennzeichnet, daß $R^1$ und $R^2$ beide für die Methyl- oder Ethylgruppe stehen und $R^3$ die Methylgruppe oder die Carboxymethyl-, β-Sulfatoethyl- oder β-Sulfoethyl-Gruppe oder eine durch eine Sulfatogruppe substituierte n-Propylgruppe ist.

**13.** Verwendung einer in Anspruch 1 genannten und definierten Verbindung der allgemeinen Formel (1) zum Färben (einschließlich Bedrucken) von hydroxy- und/oder carbonamidgruppenhaltigem Material, insbesondere Fasermaterial.

**14.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mit Hilfe eines alkalisch wirkenden Mittels fixiert, dadurch gekennzeichnet, daß man als Farbstoff eine Verbindung der in Anspruch 1 genannten und definierten allgemeinen Formel (1) einsetzt.

**15.** Verfahren zur Herstellung einer Verbindung der allgemeinen Formel

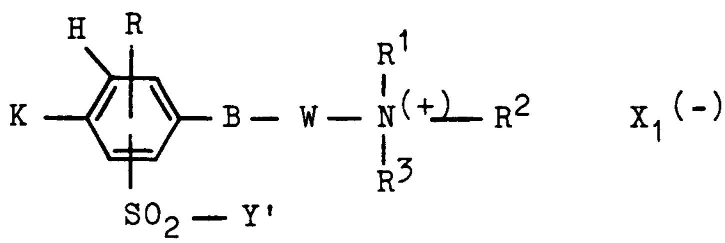

in welcher

K die Nitrogruppe oder die Aminogruppe bedeutet,

| | |
|---|---|
| Y' | die Vinylgruppe oder eine Ethylgruppe, die in β-Stellung eine durch ein Alkali eliminierbaren Substituenten enthält, oder bevorzugt die β-Hydroxyethyl-Gruppe ist, |
| $X_1^{(-)}$ | das Moläquivalent eines beliebigen Anions bedeutet und |
| R, B, W, $R^1$, $R^2$ und $R^3$ | eine der in Anspruch 1 genannten Bedeutungen haben, wobei diese als substituierte Alkylgruppen auch hydroxysubstituierte Alkylgruppen sein können und die Gruppe $-SO_2-Y'$ bevorzugt in ortho-Stellung zur Gruppe B gebunden ist, |

dadurch gekennzeichnet, daß man eine Verbindung der allgemeinen Formel (5)

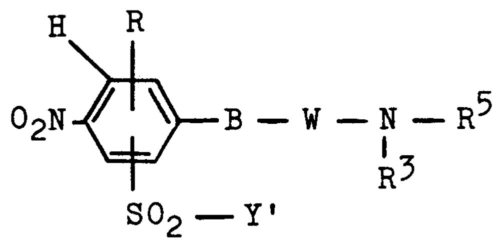

(5)

in welcher Y', B, W, R und $R^3$ die oben genannten Bedeutungen haben und $R^5$ für ein Wasserstoffatom steht oder eine der Bedeutungen von $R^2$ besitzt, mit einem Alkylierungsmittel umsetzt und gegebenenfalls die Nitrogruppe zur Aminogruppe reduziert.

**16.** Verfahren nach Anspruch 15, dadurch gekennzeichnet, daß B eine Gruppe der Formel -NH- ist, W den Ethylen- oder n-Propylen- oder den 2-Sulfato-1,3-propylen- oder 2-Hydroxy-1,3-propylen-Rest darstellt, R ein Wasserstoffatom bedeutet, Y' für die β-Hydroxyethyl-Gruppe steht, $R^1$ und $R^2$ beide für die Methyl- oder Ethylgruppe stehen und $R^3$ die Methylgruppe oder die Carboxymethyl-, β-Sulfatoethyl- oder β-Hydroxyethyl-, β-Sulfoethyl-Gruppe oder eine durch eine Sulfatogruppe substituierte n-Propylgruppe ist.

**17.** Verwendung einer Verbindung von Anspruch 15 zur Synthese von faserreaktiven Farbstoffen, insbesondere von Triphendioxazin-Verbindungen der allgemeinen Formel (1) gemäß Anspruch 1.

## Claims

**Claims for the following Contracting States : BE, CH, LI, DE, FR, GB, IT**

**1.** Water-soluble triphendioxazine compounds having quaternary ammonium groups corresponding to the formula (1)

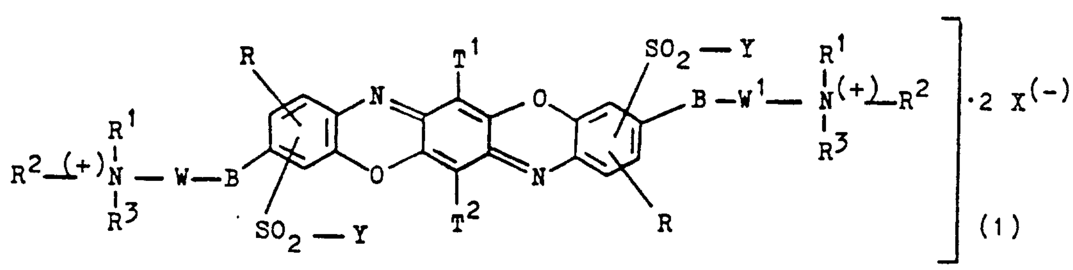

(1)

in which:

| | |
|---|---|
| B | is an oxygen or sulfur atom or an amino group of the formula -NH- or -N(R')-, in which R' is an alkyl group having 1 to 4 carbon atoms, which can be substituted, or has one of the meanings of the group $X^{(-)}[R^3,R^2,R^1]N^{(+)}$-W-or $-W^1-^{(+)}N[R^1,R^2,R^3]X^{(-)}$, where W, $W^1$, $R^1$,$R^2$,$R^3$ and $X^{(-)}$ have the definition given below, or, together with $R^1$, forms an alkylene radical having 2 to 4 carbon atoms; |
| $R^1$ | is a straight-chain or branched alkyl group having 1 to 6 carbon atoms, preferably 1 to 4 carbon atoms, which can be substituted; |

| | |
|---|---|
| $R^2$ | has one of the meanings of $R^1$ and |
| $R^3$ | has one of the meanings of $R^1$, or |
| $R^2$ and $R^3$, | together with the positively charged nitrogen atom and optionally a further heteroatom, form a heterocyclic radical, it being possible optionally for a benzo radical to be fused onto the heterocyclic radical; |
| $X^{(-)}$ | is the molar equivalent of a colorless anion (and in the case where one of the substituents of $R^1$, $R^2$ and $R^3$ contains an acid group, this is capable of forming an inner salt with the ammonium nitrogen, so that in this case the meaning of $X^{(-)}$ is completely superfluous); |
| W | is an alkylene radical having 2 to 6 carbon atoms, which can be substituted by 1 or 2 substituents from the group comprising sulfato, phosphato, carboxyl, sulfo, phenyl, monosulfophenyl and disulfophenyl, or is an alkylene radical having 4 to 12 carbon atoms, which is interrupted by 1 to 5 hetero groups selected from the groups -O-, -S-, $-SO_2-$, -CO-, 1,4-piperidino, -NH- and -N(R°)-, in which R° is an alkyl group having 1 to 6 carbon atoms, which can be substituted by a sulfo, sulfato, carboxyl, phosphato, phenyl, monosulfophenyl or disulfophenyl group, or denotes an alkanoyl group having 2 to 5 carbon atoms; |
| $W^1$ | has one of the meanings of W; |
| Y | is the vinyl group or the ethyl group, which contains in the β-position a substituent which can be eliminated by an alkali, the group $-SO_2-Y$ preferably being bonded to the benzene nucleus in the ortho-position relative to the radical B; |
| R | is a hydrogen atom or a sulfo group; |
| $T^1$ | is a hydrogen atom or a halogen atom, a cycloalkyl group having 5 to 8 carbon atoms, an aralkyloxy group, an alkoxy group having 1 to 4 carbon atoms, an aryloxy group, an alkyl group having 1 to 4 carbon atoms, an aryl group, an aralkyl group, a cyano group, a carboxyl group, a carbalkoxy group having 2 to 5 carbon atoms, an arylamino group, a carbamoyl group, an N-alkylcarbamoyl group or N,N-dialkylcarbamoyl group with alkyl radicals having in each case 1 to 4 carbon atoms, an N-arylcarbamoyl group, an alkanoylamino group having 2 to 5 carbon atoms, or an aroylamino group, the aryl radicals in these substituents mentioned preferably being phenyl radicals, which can be further substituted by 1 or 2 substituents from the group comprising halogen, nitro, alkyl having 1 to 4 carbon atoms, alkoxy having 1 to 4 carbon atoms, carboxyl and sulfo; |
| $T^2$ | has one of the meanings given for $T^1$; and |

the individual members of the formula, including those which appear twice, can have meanings which are identical to one another or different from one another.

**2.** A compound as claimed in claim 1, wherein $T^1$ or $T^2$ or both each denote a hydrogen atom, an alkanoylamino group having 2 to 5 carbon atoms, a phenoxy group, which can be substituted, an alkoxy group having 1 to 4 carbon atoms or an alkyl group having 1 to 4 carbon atoms or, preferably, a chlorine atom or bromine atom.

**3.** A compound as claimed in claim 1 or 2, wherein $R^1$, $R^2$ and $R^3$ are each identical to one another or different from one another and are an alkyl radical having 1 to 4 carbon atoms, which can be substituted by 1 or 2 substituents from the group comprising carboxyl, sulfo, sulfato, phosphato, alkoxy having 1 to 4 carbon atoms, alkanoyloxy having 2 to 5 carbon atoms, phenyl and phenyl which is substituted by 1 or 2 sulfo groups.

**4.** A compound as claimed in claim 1 or 2, wherein $R^1$, $R^2$ and $R^3$ are each identical to one another or different from one another and denote methyl, ethyl, 1-propyl, 2-propyl, 1-butyl, 3- or 4-sulfobenzyl, β-sulfato-ethyl, β-phosphato-ethyl, carboxymethyl, β-sulfo-ethyl, ω-sulfato-hexyl, γ-sulfato-propyl, β-carboxy-ethyl or β-acetyloxy-ethyl.

**5.** A compound as claimed in at least one of claims 1 to 4, wherein 2 $X^{(-)}$ together denote the sulfate ion.

**6.** A compound as claimed in at least one of claims 1 to 5, wherein B represents the amino group -NH-.

**7.** A compound as claimed in at least one of claims 1 to 6, wherein Y denotes the β-sulfatoethyl group.

**8.** A compound as claimed in at least one of claims 1 to 7, wherein R denotes a hydrogen atom.

**9.** A compound as claimed in at least one of claims 1 to 8, wherein $T^1$ and $T^2$ both represent a chlorine atom.

**10.** A compound as claimed in at least one of claims 1 to 9, wherein $W^1$ is the 1,2-ethylene, 1,3-propylene or 2-sulfato-1,3-propylene radical or a radical of the formula (a), (b), (d), ($j_1$) or ($k_1$)

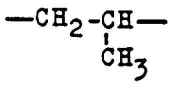 (a) 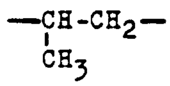 (b) 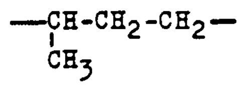 (d)

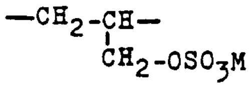 ($j_1$) $-CH_2-CH_2-(O-CH_2-CH_2)_n-$ ($k_1$)

in which M is a hydrogen atom or an alkali metal and n represents a number from 1 to 5.

**11.** A compound as claimed in at least one of claims 1 to 10, wherein W is the 1,2-ethylene, 1,3-propylene or 2-sulfato-1,3-propylene radical or a radical of the formula (a), (b), (e), ($j_2$) or ($k_2$)

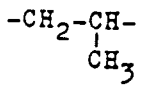 (a) 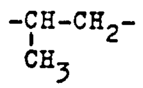 (b) 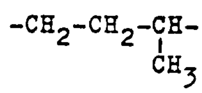 (e)

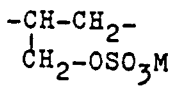 ($j_2$) $-(CH_2-CH_2-O)_n-CH_2-CH_2-$ ($k_2$)

in which M is a hydrogen atom or an alkali metal and n represents a number from 1 to 5.

**12.** A compound as claimed in at least one of claims 1 to 11, wherein $R^1$ and $R^2$ both represent the methyl or ethyl group and $R^3$ is the methyl group or the carboxymethyl, β-sulfatoethyl or β-sulfoethyl group or an n-propyl group which is substituted by a sulfato group.

**13.** A process for the preparation of a compound of the formula (1) as mentioned and defined in claim 1, which comprises cyclizing a compound of the formula (2)

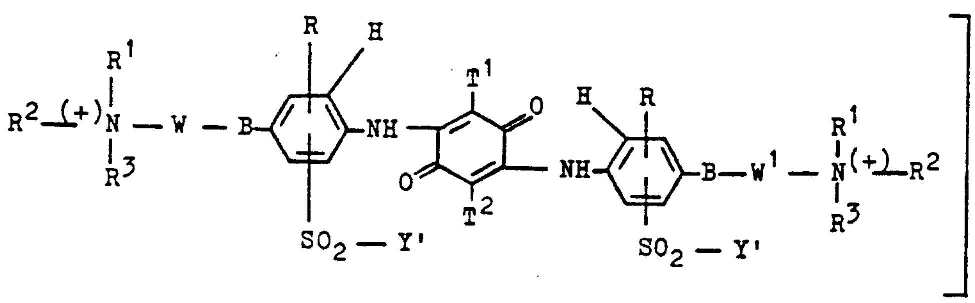 $\cdot 2\ X_1^{(-)}$

(2)

(in which Y' has one of the meanings of Y as defined in claim 1 or is the β-hydroxyethyl group, $X_1^{(-)}$ denotes the molar equivalent of any desired anion and $R^1$, $R^2$, $R^3$, B, W, $W^1$, R, $T^1$ and $T^2$ have the meanings given in claim 1, it also being possible for these to be, as substituted alkyl groups, hydroxyl-substituted alkyl groups and the groups $-SO_2-Y'$ preferably being bonded in the ortho-position relative to the group B) to give the triphendioxazine compound of the formula (1), in an inert or acid medium and if appropriate in the presence of an oxidizing agent.

**14.** The use of a compound of the formula (1) as mentioned and defined in claim 1 for dyeing (including printing) a material containing hydroxyl and/or carboxamide groups, in particular a fiber material.

**15.** A process for dyeing (including printing) a material containing hydroxyl and/or carboxamide groups, in particular a fiber material, in which a dyestuff is applied to the material or incorporated into the material and is fixed by means of heat and/or with the aid of an alkaline agent, which comprises using a compound of the formula (1) as mentioned and defined in claim 1 as the dyestuff.

**16.** A compound of the formula

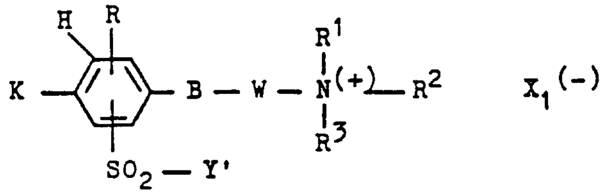

in which

| | |
|---|---|
| K | denotes the nitro group or the amino group, |
| Y' | is the vinyl group or an ethyl group, which contains in the $\beta$-position a substituent which can be eliminated by an alkali, or is preferably the $\beta$-hydroxyethyl group, |
| $X_1^{(-)}$ | denotes the molar equivalent of any desired anion and |
| R, B, W, $R^1$, $R^2$ and $R^3$ | have one of the meanings given in claim 1, it also being possible for these to be, as substituted alkyl groups, hydroxy-substituted alkyl groups and the group $-SO_2$-Y' preferably being bonded in the ortho-position relative to the group B. |

**17.** A compound as claimed above, wherein B is a group of the formula -NH-, W represents the ethylene or n-propylene or the 2-sulfato-1,3-propylene or 2-hydroxy-1,3-propylene radical, R denotes a hydrogen atom, Y' represents the $\beta$-hydroxyethyl group, $R^1$ and $R^2$ both represent the methyl or ethyl group and $R^3$ is the methyl group or the carboxymethyl, $\beta$-sulfatoethyl, $\beta$-hydroxyethyl or $\beta$-sulfoethyl group or an n-propyl group substituted by a sulfato group.

**18.** A process for the preparation of a compound mentioned and defined in claim 16, which comprises reacting a compound of the formula (5)

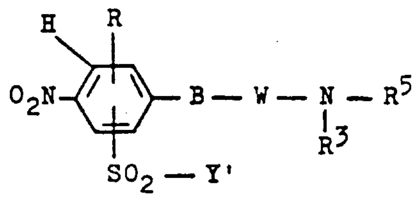

(5)

in which Y', B, W, R and $R^3$ have the meanings given in claim 17 and $R^5$ represents a hydrogen atom or has one of the meanings of $R^2$, with an alkylating agent and if appropriate reducing the nitro group to the amino group.

**19.** The use of a compound as claimed in claim 16 for the synthesis of fiber-reactive dyestuffs, in particular triphendioxazine compounds of the formula (1) as claimed in claim 1.

**Claims for the following Contracting State : ES**

**1.** A process for the preparation of a water-soluble triphendioxazine compound having quaternary ammonium groups corresponding to the formula (1)

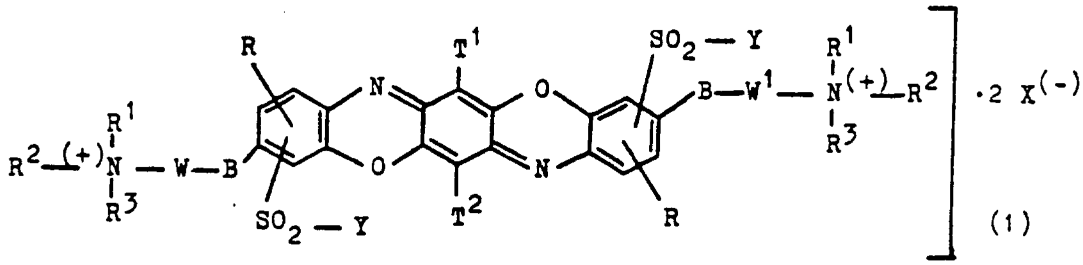

(1)

in which:

B is an oxygen or sulfur atom or an amino group of the formula -NH- or -N(R')-, in which R' is an alkyl group having 1 to 4 carbon atoms, which can be substituted, or has one of the meanings of the group $X^{(-)}[R^3,R^2,R^1]N^{(+)}$-W-or $-W^1-^{(+)}N[R^1,R^2,R^3]X^{(-)}$, where W, $W^1$, $R^1$,$R^2$,$R^3$ and $X^{(-)}$ have the definition given below, or, together with $R^1$, forms an alkylene radical having 2 to 4 carbon atoms;

$R^1$ is a straight-chain or branched alkyl group having 1 to 6 carbon atoms, preferably 1 to 4 carbon atoms, which can be substituted;

$R^2$ has one of the meanings of $R^1$ and

$R^3$ has one of the meanings of $R^1$, or

$R^2$ and $R^3$, together with the positively charged nitrogen atom and optionally a further heteroatom, form a heterocyclic radical, it being possible optionally for a benzo radical to be fused onto the heterocyclic radical;

$X^{(-)}$ is the molar equivalent of a colorless anion (and in the case where one of the substituents of $R^1$, $R^2$ and $R^3$ contains an acid group, this is capable of forming an inner salt with the ammonium nitrogen, so that in this case the meaning of $X^{(-)}$ is completely superfluous);

W is an alkylene radical having 2 to 6 carbon atoms, which can be substituted by 1 or 2 substituents from the group comprising sulfato, phosphato, carboxyl, sulfo, phenyl, monosulfophenyl and disulfophenyl, or is an alkylene radical having 4 to 12 carbon atoms, which is interrupted by 1 to 5 hetero groups selected from the groups -O-, -S-, $-SO_2-$, -CO-, 1,4-piperidino, -NH- and -N(R°)-, in which R° is an alkyl group having 1 to 6 carbon atoms, which can be substituted by a sulfo, sulfato, carboxyl, phosphato, phenyl, monosulfophenyl or disulfophenyl group, or denotes an alkanoyl group having 2 to 5 carbon atoms;

$W^1$ has one of the meanings of W;

Y is the vinyl group or the ethyl group, which contains in the $\beta$-position a substituent which can be eliminated by an alkali, the group $-SO_2-Y$ preferably being bonded to the benzene nucleus in the ortho-position relative to the radical B;

R is a hydrogen atom or a sulfo group;

$T^1$ is a hydrogen atom or a halogen atom, a cycloalkyl group having 5 to 8 carbon atoms, an aralkyloxy group, an alkoxy group having 1 to 4 carbon atoms, an aryloxy group, an alkyl group having 1 to 4 carbon atoms, an aryl group, an aralkyl group, a cyano group, a carboxyl group, a carbalkoxy group having 2 to 5 carbon atoms, an arylamino group, a carbamoyl group, an N-alkylcarbamoyl group or N,N-dialkylcarbamoyl group with alkyl radicals having in each case 1 to 4 carbon atoms, an N-arylcarbamoyl group, an alkanoylamino group having 2 to 5 carbon atoms, or an aroylamino group, the aryl radicals in these substituents mentioned preferably being phenyl radicals, which can be further substituted by 1 or 2 substituents from the group comprising halogen, nitro, alkyl having 1 to 4 carbon atoms, alkoxy having 1 to 4 carbon atoms, carboxyl and sulfo;

$T^2$ has one of the meanings given for $T^1$; and

the individual members of the formula, including those which appear twice, can have meanings which

are identical to one another or different from one another, which comprises cyclizing a compound of the formula (2)

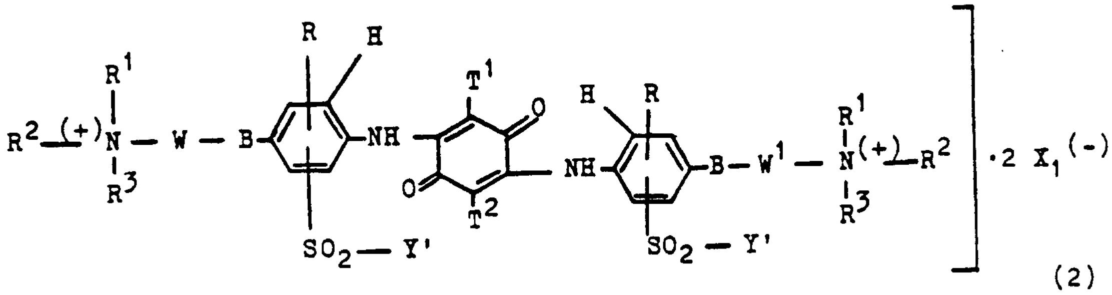

(2)

(in which Y' has one of the meanings of Y or is the $\beta$-hydroxyethyl group, $X_1^{(-)}$ denotes the molar equivalent of any desired anion and $R^1$, $R^2$, $R^3$, B, W, $W^1$, R, $T^1$ and $T^2$ have the meanings given above, it also being possible for these to be, as substituted alkyl groups, hydroxyl-substituted alkyl groups and the groups $-SO_2$-Y' preferably being bonded in the ortho-position relative to the group B) to give the triphendioxazine compound of the formula (1), in an inert or acid medium and if appropriate in the presence of an oxidizing agent.

**2.** The process as claimed in claim 1, wherein $T^1$ or $T^2$ or both each denote a hydrogen atom, an alkanoylamino group having 2 to 5 carbon atoms, a phenoxy group, which can be substituted, an alkoxy group having 1 to 4 carbon atoms or an alkyl group having 1 to 4 carbon atoms or, preferably, a chlorine atom or bromine atom.

**3.** The process as claimed in claim 1 or 2, wherein $R^1$, $R^2$ and $R^3$ are each identical to one another or different from one another and are an alkyl radical having 1 to 4 carbon atoms, which can be substituted by 1 or 2 substituents from the group comprising carboxyl, sulfo, sulfato, phosphato, alkoxy having 1 to 4 carbon atoms, alkanoyloxy having 2 to 5 carbon atoms, phenyl and phenyl which is substituted by 1 or 2 sulfo groups.

**4.** The process as claimed in claim 1 or 2, wherein $R^1$, $R^2$ and $R^3$ are each identical to one another or different from one another and denote methyl, ethyl, 1-propyl, 2-propyl, 1-butyl, 3- or 4-sulfobenzyl, $\beta$-sulfato-ethyl, $\beta$-phosphato-ethyl, carboxymethyl, $\beta$-sulfo-ethyl, $\omega$-sulfato-hexyl, $\gamma$-sulfato-propyl, $\beta$-carboxy-ethyl or $\beta$-acetyloxy-ethyl.

**5.** The process as claimed in at least one of claims 1 to 4, wherein 2 $X^{(-)}$ together denote the sulfate ion.

**6.** The process as claimed in at least one of claims 1 to 5, wherein B represents the amino group -NH-.

**7.** The process as claimed in at least one of claims 1 to 6, wherein Y denotes the $\beta$-sulfatoethyl group.

**8.** The process as claimed in at least one of claims 1 to 7, wherein R denotes a hydrogen atom.

**9.** The process as claimed in at least one of claims 1 to 8, wherein $T^1$ and $T^2$ both represent a chlorine atom.

**10.** The process as claimed in at least one of claims 1 to 9, wherein $W^1$ is the 1,2-ethylene, 1,3-propylene or 2-sulfato-1,3-propylene radical or a radical of the formula (a), (b), (d), ($j_1$) or ($k_1$)

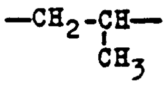 (a) 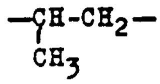 (b) 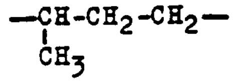 (d)

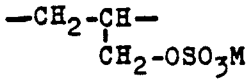 ($j_1$) $-CH_2-CH_2-(O-CH_2-CH_2)_n-$ ($k_1$)

in which M is a hydrogen atom or an alkali metal and n represents a number from 1 to 5.

**11.** The process as claimed in at least one of claims 1 to 10, wherein W is the 1,2-ethylene, 1,3-propylene or 2-sulfato-1,3-propylene radical or a radical of the formula (a), (b), (e), ($j_2$) or ($k_2$)

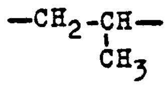 (a) 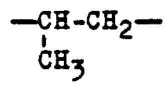 (b) 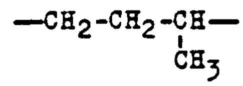 (e)

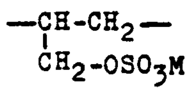 ($j_2$) $-(CH_2-CH_2-O)_n-CH_2-CH_2-$ ($k_2$)

in which M is a hydrogen atom or an alkali metal and n represents a number from 1 to 5.

**12.** The process as claimed in at least one of claims 1 to 11, wherein $R^1$ and $R^2$ both represent the methyl or ethyl group and $R^3$ is the methyl group or the carboxymethyl, $\beta$-sulfatoethyl or $\beta$-sulfoethyl group or an n-propyl group which is substituted by a sulfato group.

**13.** The use of a compound of the formula (1) mentioned and defined in claim 1 for dyeing (including printing) a material containing hydroxyl and/or carboxamide groups, in particular a fiber material.

**14.** A process for dyeing (including printing) a material containing hydroxyl and/or carboxamide groups, in particular a fiber material, in which a dyestuff is applied to the material or incorporated into the material and is fixed by means of heat and/or with the aid of an alkaline agent, which comprises using a compound of the formula (1) as mentioned and defined in claim 1 as the dyestuff.

**15.** A process for the preparation of a compound of the formula

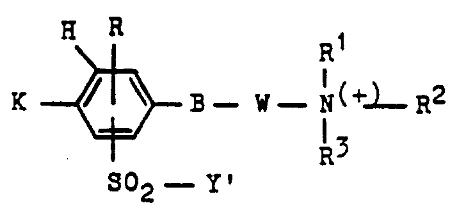 $X_1^{(-)}$

in which

| | |
|---|---|
| K | denotes the nitro group or the amino group, |
| Y' | is the vinyl group or an ethyl group, which contains in the $\beta$-position a substituent which can be eliminated by an alkali, or is preferably the $\beta$-hydroxyethyl group, |
| $X_1^{(-)}$ | denotes the molar equivalent of any desired anion and |
| R, B, W, $R^1$, $R^2$ and $R^3$ | have one of the meanings given in claim 1, it also being possible for these to be, as substituted alkyl groups, hydroxy-substituted alkyl groups and the group $-SO_2-Y'$ preferably being bonded in the ortho-position |

relative to the group B, which comprises reacting a compound of the formula (5)

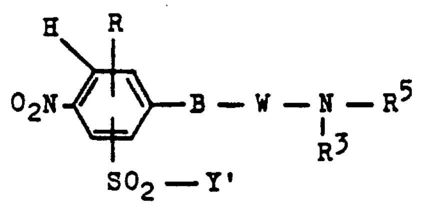

(5)

in which Y', B, W, R and $R^3$ have the meanings given above and $R^5$ represents a hydrogen atom or has one of the meanings of $R^2$, with an alkylating agent and if appropriate reducing the nitro group to the amino group.

**16.** The process as claimed in claim 15, wherein B is a group of the formula -NH-, W represents the ethylene or n-propylene or the 2-sulfato-1,3-propylene or 2-hydroxy-1,3-propylene radical, R denotes a hydrogen atom, Y' represents the $\beta$-hydroxyethyl group, $R^1$ and $R^2$ both represent the methyl or ethyl group and $R^3$ is the methyl group or the carboxymethyl, $\beta$-sulfatoethyl, $\beta$-hydroxyethyl or $\beta$-sulfoethyl group or an n-propyl group substituted by a sulfato group.

**17.** The use of a compound as in claim 15 for the synthesis of fiber-reactive dyestuffs, in particular triphendioxazine compounds of the formula (1) as in claim 1.

**Revendications**

**Revendications pour les Etats contractants suivants : BE, CH, LI, DE, FR, GB, IT**

**1.** Triphénoxodiazines solubles dans l'eau comportant des groupes ammonium quaternaire, correspondant à la formule générale (1)

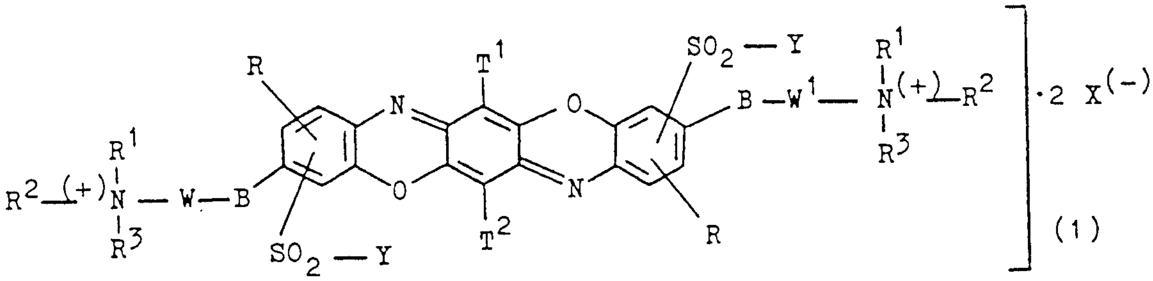

(1)

dans laquelle :

B est un atome d'oxygène ou de soufre ou un groupe amino de formule -NH- ou -N(R')-, dans laquelle R' est un groupe alkyle éventuellement substitué ayant de 1 à 4 atomes de carbone, ou l'un des composés choisis entre $X^{(-)}[R^3,R^2,R^1]N^{(+)}$-W- ou -$W^1$-$^{(+)}N[R^1,R^2,R^3]X^{(-)}$ où W, $W^1$, $R^1$, $R^2$, $R^3$ et $X^{(-)}$ ont les significations données ci-après, ou encore forment avec $R^1$ un radical alkylène ayant de 2 à 4 atomes de carbone ;

$R^1$ est un groupe alkyle à chaîne droite ou ramifiée, éventuellement substitué, ayant de 1 à 6 et de préférence de 1 à 4 atomes de carbone ;

$R^2$ a l'une des significations de $R^1$, et

$R^3$ a l'une des significations de $R^1$, ou

$R^2$ et $R^3$ forment, avec l'atome d'azote à charge positive et éventuellement avec un autre hétéroatome, un radical hétérocyclique sur lequel est éventuellement condensé un radical benzo ;

$X^{(-)}$ est l'équivalent en moles d'un anion incolore (pour lequel, quand l'un des substituants de $R^1$, $R^2$ et $R^3$ contient un groupe acide, ce dernier peut former avec l'atome d'azote un sel interne, de sorte que la signification de $X^{(-)}$ disparaît complètement) ;

W est un radical alkylène ayant de 2 à 6 atomes de carbone, éventuellement substitué par un ou

deux substituants choisis parmi l'ensemble comprenant les radicaux sulfato, phosphato, carboxy, sulfo, phényle, monosulfophényle ou disulfophényle, ou encore un radical alkylène ayant de 4 à 12 atomes de carbone, interrompu par 1 à 5 hétéroatomes qui sont choisis parmi -O- et -S-, un radical $-SO_2-$, -CO-, 1,4-piperidino, -NH- ou -N(R°)-, où R° est un groupe alkyle ayant de 1 à 6 atomes de carbone pouvant être substitué par un groupe sulfo, sulfato, carboxy, phosphato, phényle, monosulfophényle ou disulfophényle, ou encore un groupe alcanoyle ayant de 2 à 5 atomes de carbone ;

$W^1$ a l'une des significations de W ;

Y est le groupe vinyle ou le groupe éthyle, qui en position $\beta$ contient un substituant éliminable par un alcali, le groupe $-SO_2-Y$ étant de préférence lié au noyau benzénique en position ortho par rapport au radical B ;

R est un atome d'hydrogène ou un groupe sulfo ;

$T^1$ est un atome d'hydrogène ou un atome d'halogène, un groupe cycloalkyle ayant de 5 à 8 atomes de carbone, un groupe aralkyloxy, un groupe alcoxy ayant de 1 à 4 atomes de carbone, un groupe aryloxy, un groupe alkyle ayant de 1 à 4 atomes de carbone, un groupe aryle, un groupe aralkyle, un groupe cyano, un groupe carboxy, un groupe carbalcoxy ayant de 2 à 5 atomes de carbone, un groupe arylamino, un groupe carbamoyle, un groupe N-alkylcarbamoyle ou un groupe N,N-dialkyl-carbamoyle dont les fragments alkyle ont chacun de 1 à 4 atomes de carbone, un groupe N-arylcarbamoyle, un groupe alcanoylamino ayant de 2 à 5 atomes de carbone, ou un groupe aroylamino dont les résidus aryle, dans ces substituants, sont de préférence des radicaux phényle pouvant encore être substitués par un ou deux substituants choisis parmi l'ensemble comprenant les radicaux halogéno, nitro, alkyle ayant de 1 à 4 atomes de carbone, alcoxy ayant de 1 à 4 atomes de carbone, carboxy et sulfo ;

$T^2$ a l'une des significations données pour $T^1$ ;

les différents éléments des formules, même apparaissant deux fois, pouvant avoir des significations identiques ou différentes.

2. Composé selon la revendication 1, caractérisé en ce que $T^1$ ou $T^2$, ou les deux, représentent chacun un atome d'hydrogène, un groupe alcanoylamino ayant de 2 à 5 atomes de carbone, un groupe phénoxy éventuellement substitué, un groupe alcoxy ayant de 1 à 4 atomes de carbone ou un groupe alkyle ayant de 1 à 4 atomes de carbone, ou de préférence un atome de chlore ou de brome.

3. Composé selon les revendications 1 ou 2, caractérisé en ce que $R^1$, $R^2$ et $R^3$ sont identiques les uns aux autres ou différents les uns des autres et représentent chacun un radical alkyle ayant de 1 à 4 atomes de carbone, éventuellement substitué par un ou deux substituants choisis parmi l'ensemble comprenant les radicaux carboxy, sulfo, sulfato, phosphato, alcoxy ayant de 1 à 4 atomes de carbone, alcanoyloxy ayant de 2 à 5 atomes de carbone, et phényle éventuellement substitué par un ou deux groupes sulfo.

4. Composé selon les revendications 1 ou 2, caractérisé en ce que $R^1$, $R^2$ et $R^3$, qui sont identiques les uns aux autres ou différents les uns des autres, représentent chacun l'un des radicaux méthyle, éthyle, 1-propyle, 2-propyle, 1-butyle, 3 ou 4-sulfobenzyle, $\beta$-sulfatoéthyle, $\beta$-phosphatoéthyle, carboxyméthyle, $\beta$-sulfoéthyle, oméga-sulfatohexyl, gamma-sulfatopropyle, $\beta$-carboxyéthyle ou $\beta$-acétyloxyéthyle.

5. Composé selon au moins l'une des revendications 1 à 4, caractérisé en ce que deux anions $X^{(-)}$ formentensemble l'ion sulfate.

6. Composé selon au moins l'une des revendications 1 à 5, caractérisé en ce que B est le groupe amino -NH-.

7. Composé selon au moins l'une des revendications 1 à 6, caractérisé en ce que Y est le groupe $\beta$-sulfatoéthyle.

8. Composé selon au moins l'une des revendications 1 à 7, caractérisé en ce que R est un atome d'hydrogène.

9. Composé selon au moins l'une des revendications 1 à 8, caractérisé en ce que $T^1$ et $T^2$ représentent chacun un atome de chlore.

**10.** Composé selon au moins l'une des revendications 1 à 9, caractérisé en ce que $W^1$ est le radical 1,2-éthylène, 1,3-propylène ou 2-sulfato-1,3-propylène, ou un radical ayant les formules (a), (b), (d), ($j_1$) ou ($k_1$)

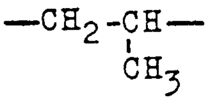 (a) 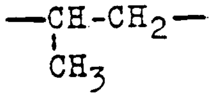 (b) 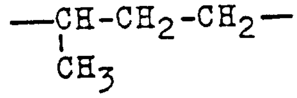 (d)

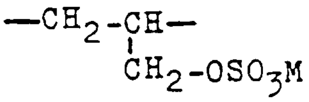 ($j_1$) $—CH_2-CH_2-(O-CH_2-CH_2)_n—$ ($k_1$)

où M est un atome d'hydrogène ou un métal alcalin, et n est un nombre de 1 à 5.

**11.** Composé selon au moins l'une des revendications 1 à 10, caractérisé en ce que W est l'un des radicaux 1,2-éthylène, 1,3-propylène ou 2-sulfato-1,3-propylène ou l'un des radicaux de formules (a), (b), (e), ($j_2$) ou ($k_2$)

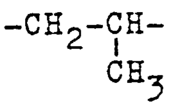 (a) 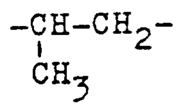 (b) 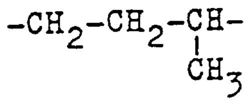 (e)

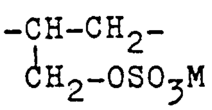 ($j_2$) $-(CH_2-CH_2-O)_n-CH_2-CH_2-$ ($k_2$)

où M est un atome d'hydrogène ou un métal alcalin, et n est un nombre de 1 à 5.

**12.** Composé selon au moins l'une des revendications 1 à 11, caractérisé en ce que $R^1$ et $R^2$ représentent chacun le groupe méthyle ou éthyle, et $R^3$ est le groupe méthyle ou le groupe carboxyméthyle, $\beta$-sulfatoéthyle ou $\beta$-sulfoéthyle ou encore un groupe n-propyle substitué par un groupe sulfato.

**13.** Procédé pour préparer le composé de formule générale (1) selon la revendication 1, caractérisé en ce qu'on cyclise un composé de formule générale (2)

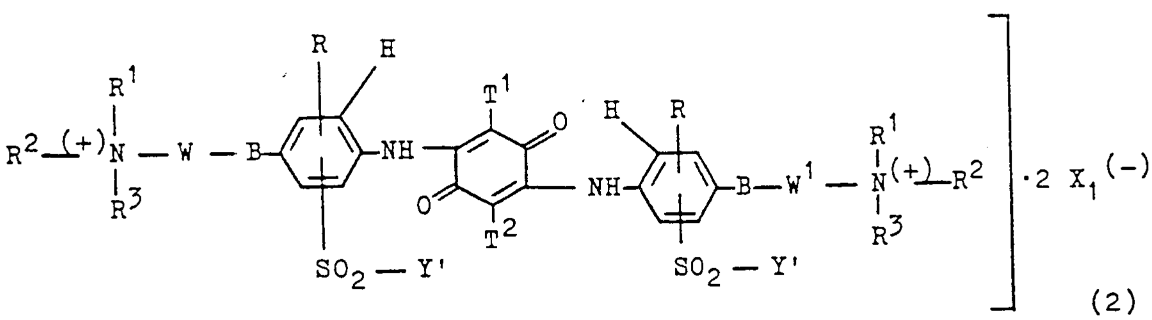

(2)

(dans laquelle Y' a l'une des significations de Y selon la revendication 1 ou est le groupe $\beta$-hydroxyéthyle, $X_1^{(-)}$ est l'équivalent en moles d'un anion quelconque, et $R^1$, $R^2$, $R^3$, B, W, $W^1$, R, $T^1$ et $T^2$ ont les significations données dans la revendication 1, ces derniers, en tant que groupes alkyle substitués, pouvant être aussi des groupes alkyle hydroxylés, et les groupes $-SO_2-Y'$ tant de préférence en position ortho par rapport au groupe B), dans un milieu inerte ou acide et éventuellement en présence d'un oxydant, pour donner la triphénodioxazine de formule (1).

14. Utilisation d'un composé de formule générale (1) selon la revendication 1 pour teindre (et imprimer) un matériau hydroxylé et/ou contenant des groupes carboxamide, notamment un matériau fibreux.

15. Procédé pour teindre (et imprimer) un matériau hydroxylé et/ou contenant des groupes carboxamide, notamment un matériau fibreux, dans lequel on applique un colorant sur le matériau, ou encore on l'incorpore dans le matériau, et on le fixe à l'aide de chaleur et/ou à l'aide d'un agent à effet alcalin, caractérisé en ce qu'on utilise comme colorant un composé de formule (1) selon la revendication 1.

16. Composé de formule générale

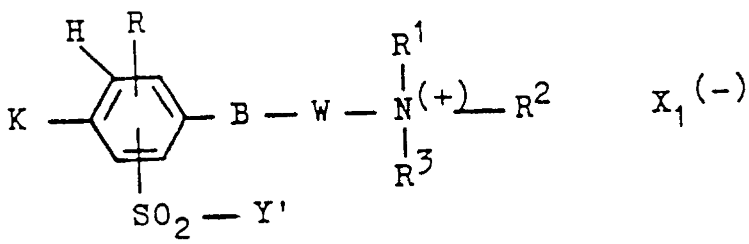

dans laquelle

K est le groupe nitro ou le groupe amino,

Y' est le groupe vinyle ou le groupe éthyle, qui contient en position $\beta$ un substituant éliminable par un alcali, ou est de préférence le groupe $\beta$-hydroxyéthyle,

$X_1^{(-)}$ est l'équivalent en moles d'un anion quelconque, et

R, B, W, $R^1$, $R^2$ et $R^3$ ont l'une des significations données dans la revendication 1, ces radicaux, quand il s'agit de groupes alkyle substitué, pouvant aussi être des groupes alkyle hydroxylé, et le groupe $-SO_2$-Y' étant de préférence lié en position ortho par rapport au groupe B.

17. Composé selon la revendication 16, caractérisé en ce que B est un groupe de formule -NH-, W est le radical éthylène ou n-propylène ou 2-sulfato-1,3-propylène ou 2-hydroxy-1,3-propylène, R est un atome d'hydrogène, Y' est le groupe $\beta$-hydroxyéthyle, $R^1$ et $R^2$ représentent chacun le groupe méthyle ou éthyle, et $R^3$ est le groupe méthyle ou le groupe carboxyméthyle, $\beta$-sulfatoéthyle, $\beta$-hydroxyéthyle ou $\beta$-sulfoéthyle, ou encore un groupe n-propyle substitué par un groupe sulfato.

18. Procédé pour préparer un composé selon la revendication 16, caractérisé en ce qu'on fait réagir avec un agent d'alkylation un composé de formule générale (5)

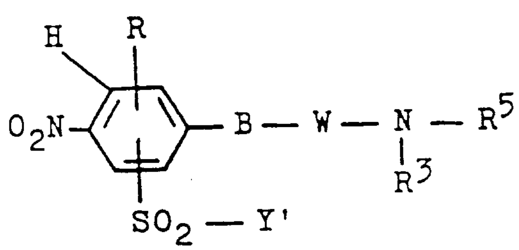

(5)

dans laquelle Y', B, W, R et $R^3$ ont les significations données dans la revendication 17, et $R^5$ est un atome d'hydrogène ou a l'une des significations de $R^2$, et éventuellement en ce qu'on réduit le groupe nitro en un groupe amino.

19. Utilisation d'un composé ci-dessus pour synthétiser des colorants réactifs sur les fibres, notamment des triphénodioxazines de formule (1) selon la revendication 1.

**Revendications pour l'Etat contractant suivant : ES**

1. Procédé pour préparer une triphénodioxazine soluble dans l'eau comportant des groupes ammonium quaternaire et correspondant à la formule générale (1)

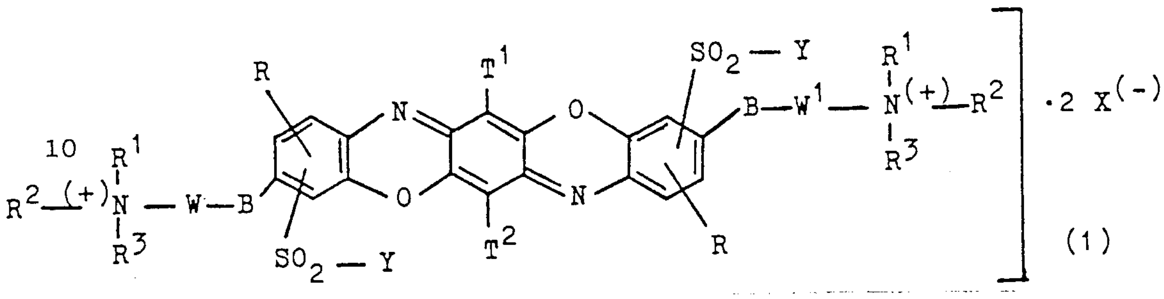

(1)

dans laquelle :

B est un atome d'oxygène ou de soufre ou un groupe amino de formule -NH- ou -N(R')-, dans laquelle R' est un groupe alkyle éventuellement substitué ayant de 1 à 4 atomes de carbone, ou l'un des composés choisis entre $X^{(-)}[R^3,R^2,R^1]N^{(+)}$-W- ou -$W^1$-$^{(+)}N[R^1,R^2,R^3]X^{(-)}$ où W, $W^1$, $R^1$, $R^2$, $R^3$ et $X^{(-)}$ ont les significations données ci-après, ou encore forment avec $R^1$ un radical alkylène ayant de 2 à 4 atomes de carbone ;

$R^1$ est un groupe alkyle à chaîne droite ou ramifiée, éventuellement substitué, ayant de 1 à 6 et de préférence de 1 à 4 atomes de carbone ;

$R^2$ a l'une des significations de $R^1$, et

$R^3$ a l'une des significations de $R^1$, ou

$R^2$ et $R^3$ forment, avec l'atome d'azote à charge positive et éventuellement avec un autre hétéroatome, un radical hétérocyclique sur lequel est éventuellement condensé un radical benzo ;

$X^{(-)}$ est l'équivalent en moles d'un anion incolore (pour lequel, quand l'un des substituants de $R^1$, $R^2$ et $R^3$ contient un groupe acide, ce dernier peut former avec l'atome d'azote un sel interne, de sorte que la signification de $X^{(-)}$ disparaît complètement) ;

W est un radical alkylène ayant de 2 à 6 atomes de carbone, éventuellement substitué par un ou deux substituants choisis parmi l'ensemble comprenant les radicaux sulfato, phosphato, carboxy, sulfo, phényle, monosulfophényle ou disulfophényle, ou encore un radical alkylène ayant de 4 à 12 atomes de carbone, interrompu par 1 à 5 hétéroatomes qui sont choisis parmi -O- et -S-, un radical -$SO_2$-, -CO-, 1,4-piperidino, -NH- ou -N(R°)-, où R° est un groupe alkyle ayant de 1 à 6 atomes de carbone pouvant être substitué par un groupe sulfo, sulfato, carboxy, phosphato, phényle, monosulfophényle ou disulfophényle, ou encore un groupe alcanoyle ayant de 2 à 5 atomes de carbone;

$W^1$ a l'une des significations de W ;

Y est le groupe vinyle ou le groupe éthyle, qui en position $\beta$ contient un substituant éliminable par un alcali, le groupe -$SO_2$-Y étant de préférence lié au noyau benzénique en position ortho par rapport au radical B ;

R est un atome d'hydrogène ou un groupe sulfo ;

$T^1$ est un atome d'hydrogène ou un atome d'halogène, un groupe cycloalkyle ayant de 5 à 8 atomes de carbone, un groupe aralkyloxy, un groupe alcoxy ayant de 1 à 4 atomes de carbone, un groupe aryloxy, un groupe alkyle ayant de 1 à 4 atomes de carbone, un groupe aryle, un groupe aralkyle, un groupe cyano, un groupe carboxy, un groupe carbalcoxy ayant de 2 à 5 atomes de carbone, un groupe arylamino, un groupe carbamoyle, un groupe N-alkylcarbamoyle ou un groupe N,N-dialkyl-carbamoyle dont les fragments alkyle ont chacun de 1 à 4 atomes de carbone, un groupe N-arylcarbamoyle, un groupe alcanoylamino ayant de 2 à 5 atomes de carbone, ou un groupe aroylamino dont les résidus aryle, dans ces substituants, sont de préférence des radicaux phényle pouvant encore être substitués par un ou deux substituants choisis parmi l'ensemble comprenant les radicaux halogéno, nitro, alkyle ayant de 1 à 4 atomes de carbone, alcoxy ayant de 1 à 4 atomes de carbone, carboxy et sulfo ;

$T^2$ a l'une des significations données pour $T^1$ ;

les différents éléments des formules, même apparaissant deux fois, pouvant avoir des significations identiques ou différentes ;

caractérisé en ce qu'on cyclise un composé de formule générale (2)

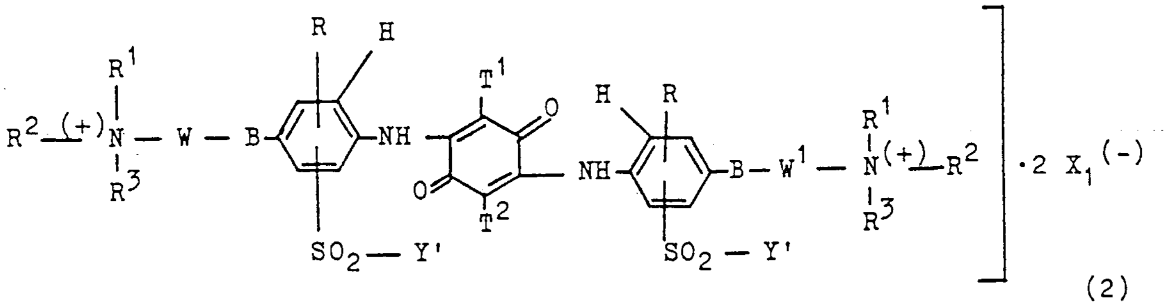

(2)

(dans laquelle Y' a l'une des significations de Y ou est le groupe $\beta$-hydroxyéthyle $X_1^{(-)}$ est l'équivalent en moles d'un anion quelconque, et $R^1$, $R^2$, $R^3$, B, W, $w^1$, R, $T^1$ et $T^2$ ont les significations données ci-dessus, ces derniers, en tant que groupes alkyle substitués, pouvant être aussi des groupes alkyle hydroxylés, et les groupes $-SO_2$-Y' tant de préférence en position ortho par rapport au groupe B), dans un milieu inerte ou acide et éventuellement en présence d'un oxydant, pour donner la triphénodioxazine de formule (1).

**2.** Procédé selon la revendication 1, caractérisé en ce que $T^1$ ou $T^2$, ou les deux, représentent chacun un atome d'hydrogène, un groupe alcanoylamino ayant de 2 à 5 atomes de carbone, un groupe phénoxy éventuellement substitué, un groupe alcoxy ayant de 1 à 4 atomes de carbone ou un groupe alkyle ayant de 1 à 4 atomes de carbone, ou de préférence un atome de chlore ou de brome.

**3.** Procédé selon les revendications 1 ou 2, caractérisé en ce que $R^1$, $R^2$ et $R^3$ sont identiques les uns aux autres ou différents les uns des autres et représentent chacun un radical alkyle ayant de 1 à 4 atomes de carbone, éventuellement substitué par un ou deux substituants choisis parmi l'ensemble comprenant les radicaux carboxy, sulfo, sulfato, phosphato, alcoxy ayant de 1 à 4 atomes de carbone, alcanoyloxy ayant de 2 à 5 atomes de carbone, et phényle éventuellement substitué par un ou deux groupes sulfo.

**4.** Procédé selon les revendications 1 ou 2, caractérisé en ce que $R^1$, $R^2$ et $R^3$, qui sont identiques les uns aux autres ou différents les uns des autres, représentent chacun l'un des radicaux méthyle, éthyle, 1-propyle, 2-propyle, 1-butyle, 3 ou 4-sulfobenzyle, $\beta$-sulfatoéthyle, $\beta$-phosphatoéthyle, carboxyméthyle, $\beta$-sulfoéthyle, oméga-sulfatohexyl, gamma-sulfatopropyle, $\beta$-carboxyéthyle ou $\beta$-acétyloxyéthyle.

**5.** Procédé selon au moins l'une des revendications 1 à 4, caractérisé en ce que deux anions $X^{(-)}$ formentensemble l'ion sulfate.

**6.** Procédé selon au moins l'une des revendications 1 à 5, caractérisé en ce que B est le groupe amino -NH-.

**7.** Procédé selon au moins l'une des revendications 1 à 6, caractérisé en ce que Y est le groupe $\beta$-sulfatoéthyle.

**8.** Procédé selon au moins l'une des revendications 1 à 7, caractérisé en ce que R est un atome d'hydrogène.

**9.** Procédé selon au moins l'une des revendications 1 à 8, caractérisé en ce que $T^1$ et $T^2$ représentent chacun un atome de chlore.

**10.** Procédé selon au moins l'une des revendications 1 à 9, caractérisé en ce que $W^1$ est le radical 1,2-éthylène, 1,3-propylène ou 2-sulfato-1,3-propylène, ou encore un radical ayant les formules (a), (b), (d), ($j_1$) ou ($k_1$)

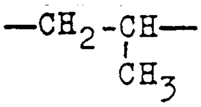 (a) 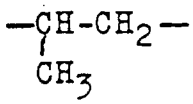 (b) 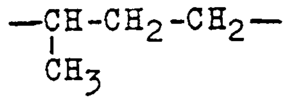 (d)

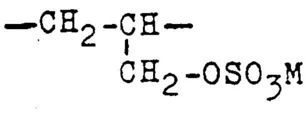 ($j_1$) $—CH_2\text{-}CH_2\text{-}(O\text{-}CH_2\text{-}CH_2)_n—$ ($k_1$)

où M est un atome d'hydrogène ou un métal alcalin, et n est un nombre de 1 à 5.

**11.** Procédé selon au'moins l'une des revendications 1 à 10, caractérisé en ce que W est l'un des radicaux 1,2-éthylène, 1,3-propylène ou 2-sulfato-1,3-propylène ou l'un des radicaux de formules (a), (b), (e), ($j_2$) ou ($k_2$)

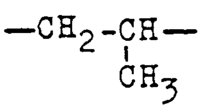 (a) 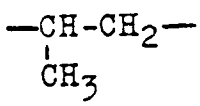 (b) 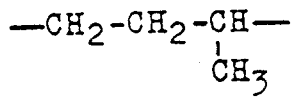 (e)

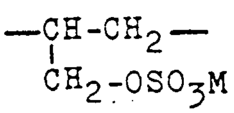 ($j_2$) $—(CH_2\text{-}CH_2\text{-}O)_n\text{-}CH_2\text{-}CH_2—$ ($k_2$)

où M est un atome d'hydrogène ou un métal alcalin, et n est un nombre de 1 à 5.

**12.** Procédé selon au moins l'une des revendications 1 à 11, caractérisé en ce que $R^1$ et $R^2$ représentent chacun le groupe méthyle ou éthyle, et $R^3$ est le groupe méthyle ou le groupe carboxyméthyle, $\beta$-sulfatoéthyle ou $\beta$-sulfoéthyle ou encore un groupe n-propyle substitué par un groupe sulfato.

**13.** Utilisation d'un composé de formule générale (1) selon la revendication 1 pour teindre (et imprimer) un matériau hydroxylé et/ou contenant des groupes carboxamide, notamment un matériau fibreux.

**14.** Procédé pour teindre (et imprimer) un matériau hydroxylé et/ou contenant des groupes carboxamide, notamment un matériau fibreux, dans lequel on applique un colorant sur le matériau, ou encore on l'incorpore dans le matériau, et on le fixe à l'aide de chaleur et/ou à l'aide d'un agent à effet alcalin, caractérisé en ce qu'on utilise comme colorant un composé de formule (1) selon la revendication 1.

**15.** Procédé pour préparer un composé de formule générale

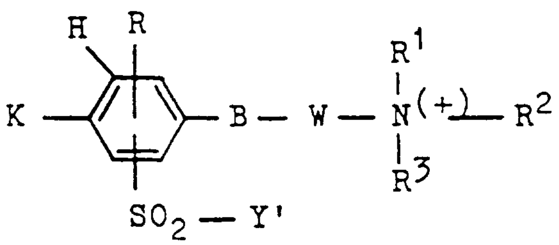 $X_1^{(-)}$

dans laquelle

K est le groupe nitro ou le groupe amino,

Y' est le groupe vinyle ou le groupe éthyle, qui contient en position $\beta$ un substituant éliminable par un alcali; ou est de préférence le groupe $\beta$-hydroxyéthyle,

$X_1^{(-)}$ est l'équivalent en moles d'un anion quelconque, et

R, B, W, $R^1$, $R^2$ et $R^3$ ont l'une des significations données dans la revendication 1, ces radicaux, quand il s'agit de groupes alkyle substitué, pouvant aussi être des groupes alkyle hydroxylé, et le groupe $-SO_2-Y'$ étant de préférence lié en position ortho par rapport au groupe B,

caractérisé en ce qu'on fait réagir avec un agent d'alkylation un composé de formule générale (5)

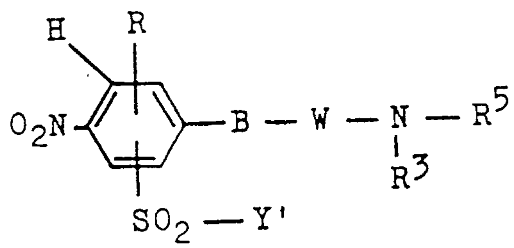

(5)

dans laquelle Y', B, W, R et $R^3$ ont les significations données ci-dessus et $R^5$ est un atome d'hydrogène ou a l'une des significations de $R^2$, et éventuellement en ce qu'on réduit le groupe nitro en un groupe amino.

**16.** Procédé selon la revendication 15, caractérisé en ce que B est un groupe de formule -NH-, W est le radical éthylène ou n-propylène ou 2-sulfato-1,3-propylène ou 2-hydroxy-1,3-propylène, R est un atome d'hydrogène, Y' est le groupe $\beta$-hydroxyéthyle, $R^1$ et $R^2$ représentent chacun le groupe méthyle ou éthyle, et $R^3$ est le groupe méthyle ou le groupe carboxyméthyle, $\beta$-sulfatoéthyle, $\beta$-hydroxyéthyle ou $\beta$-sulfoéthyle, ou encore un groupe n-propyle substitué par un groupe sulfato.

**17.** Utilisation d'un composé selon la revendication 15 pour synthétiser des colorants réactifs sur les fibres, notamment des triphénodioxazines de formule (1) selon la revendication 1.